# EUROPEAN PATENT SPECIFICATION

(11) **EP 0 461 116 B1**
(45) Date of publication and mention of the grant of the patent: **30.08.1995**
(21) Application number: 90901522.4
(22) Date of filing: 05.01.1990
(51) Int. Cl.: B65B 55/14, B65D 5/06

(54) **PACKAGING PERISHABLE LIQUIDS IN GABLE TOP CARTONS**
VERPACKEN VON VERDERBLICHEN FLÜSSIGKEITEN IN GIEBELKARTONS
CONDITIONNEMENT DE LIQUIDES PERISSABLES DANS CES CARTONS A PARTIE SUPERIEURE EN FORME DE TOIT

(30) Priority: 03.03.1989 ZA 891641; 18.08.1989 US 395585
(43) Date of publication of application: 18.12.1991
(73) Proprietor: FBI BRANDS LTD., St. Laurent, Quebec H4T 2B5 (CA)
(72) Inventor: POOLE, Donald A., Greenfield Park, Quebec (CA)
(74) Representative: Leale, Robin George
(86) International application number: CA9000011
(87) International publication number: WO9009926

(56) References cited:
- EP-A- 0 062 929
- EP-A- 0 203 572
- EP-A- 0 331 792
- WO-A-82/01175
- US-A- 3 270 940
- US-A- 3 334 799
- US-A- 3 723 060
- US-A- 3 912 576
- US-A- 4 011 800
- US-A- 4 403 465
- Spotting the Future in ESL Products, Dairy Foods, Vol. 90, No. 4, January 1989, page 71

## Description

### TECHNICAL FIELD

This invention relates to the shelf stable packaging of perishable juices and other perishable liquid products in hermetically sealed gable top cartons acceptable to the consumer. A packaged product is said to be shelf stable when it retains its desirable qualities for an extended period of time without refrigeration. Being acceptable to the consumer means that the carton is easy to open.

### BACKGROUND ART

The selection of appropriate containers and processes for packaging a particular liquid food product presents the packer with various options from which to choose. Against these must be considered numerous factors. These include cost of the container and packaging process, structural integrity and weight of the package, handling convenience for the packer and convenience for the consumer i.e., can the container be tightly packed? Is it fragile? Is it openable and resealable? The packer must also consider the distribution network and infrastructure available in the market sought to be served: is refrigeration available, if not, the packaged product must be rendered shelf stable?

A package which is too costly in relation to the value of the product itself or which is inconvenient in some respect for the consumer will meet with market resistance and likely fail to win a sufficient degree of acceptance to be commercially viable.

Traditionally juices have been packed in cans and glass bottles. The technology applicable to these packages is well known. Juices packed in these containers may be kept unrefrigerated for extended periods provided that these products and their containers have been sterilized and hermetically sealed in order to prevent entry of bacteria.

These containers have achieved wide acceptance through use. They may be easily sterilized and sealed effectively. They tolerate both internal vacuum and positive pressure. Closures such as twist off lids for bottles are acceptable to consumers because they are easy to operate and may be used to close the bottles effectively after first opening. These containers resist high temperatures and thus may be sterilized at usual temperatures without deteriorating their structural qualities.

Among the disadvantages of glass bottles and cans are cost and the weight which they add to the product. Also, because of their shape, cans and bottles cannot be tightly packed. In the case of bottles their relative fragility is also a disadvantage.

More recently greater use of so-called flexible containers has been made for the packaging of liquid food products. These include paper-based containers, molded plastic containers and plastic pouches.

Two types of paper-based flexible containers have become widely accepted, the gable top carton and the brick pack. The gable top carton has been extensively used for packaging refrigerated non-shelf stable liquid products such as milk and other dairy products and fruit juice products. The brick pack, so called because of its shape, has been extensively used in association with an aseptic packing process for liquid foods such as fruit juices, milks, sauces, etc. packaged for shelf stability and which therefore do not require refrigeration.

The gable top carton is relatively inexpensive and light weight. Moreover, because of its planar sides it can be tightly packed for shipping and storage. The gable top carton enjoys wide acceptance in the public for its ease of storage and handling after opening and for its spout which pours well and re-closes effectively even to the extent of permitting the contents to be lightly shaken without spilling. One disadvantage of the gable top carton, when compared with glass bottles, is the difficulty encountered by many consumers in opening the carton for the first time. This problem has been largely overcome in the dairy and fruit juice industry by simply weakening the seal at the spout.

A previously proposed method of weakening the spout is described in U.S Patent No. 3,116,002, wherein it is suggested that a non-adherent material "abhesive" be applied to selected areas near the spout in order to reduce the plastic-to-plastic bond formed during the sealing process. This method adds to the cost of the carton and quality control as to the precise placement of the abhesive is difficult to achieve during packing.

While the otherwise desirable goal of achieving a strong hermetic seal is defeated the consumer has become accustomed to the fact that dairy products and juices packed in this way must be kept refrigerated and have only limited shelf lives. Because of this practice of weakening the seal to please the consumer, from a consumer acceptance point of view, it is not possible to successfully market a juice in a gable top carton unless the spout is relatively easy to open.

Unfortunately, in some ways the gable top carton lacks the structural integrity of other containers, especially cans. For instance, gable top cartons are relatively intolerant of internal vacuum or pressure. Also their physical properties make them less tolerant of high sterilization temperatures. As discussed below, these drawbacks have inhibited use of gable top cartons in shelf stable packaging.

Typically, gable top cartons are formed of paperboard sheet material having an overall coating of thermoplastic film such as polyethylene applied on the surfaces of the sheet. The plastic coated paperboard is impervious to moisture and is particularly suitable for use in packaging products such as milk and orange juice. The thermoplastic coating not only serves to moisture proof the carton but also can be utilized for sealing the carton closing flaps which characterize the gable top carton. This sealing action is accomplished by heating the surfaces to be sealed while pressing them tightly together to form a liquid tight plastic-to-plastic bond.

The carton erected from the plastic-coated blank typically includes a bottom, four sidewalls extending from the bottom and united along their lateral margins, and an upper closure means which can be opened to form a spout. The closure is formed from four end wall portions united with the sidewalls and with each other at the lateral margins; the end wall portions are inclined in pairs toward each other and have marginal portions heat sealed to each other which form extensions of the end wall portions; the marginal portions of two opposite end wall portions are folded like bellows between the outer marginal portions of the two remaining end wall portions and at least one of the two inwardly folded marginal portions is moveable outward together with the pertaining end wall portions from its position between the two outer marginal portions to a new position outside these where the marginal portion after being moved outward, as well as its pertaining end wall portion, form a pouring spout and an emptying passage.

Traditionally, dairy products and fruit juices packed in gable top cartons have been kept refrigerated throughout the distribution process in order to avoid almost immediate spoilage. This spoilage would result from the fact that the gable top cartons are not sterilized and that bacteria in the environment and on the inside of the carton itself would develop very quickly. It is only refrigeration which retards spoilage for up to a few of weeks. Products packed in this way are not said to be shelf stable.

Shelf stability is extremely desirable from many standpoints. A shelf stable product is much less likely to spoil while in the distribution system and with a shelf life measured in months rather than days losses due to spoilage should be low. The packer does not need to maintain the product under refrigeration either in its warehouse or while in transport. Similarly the retailer need not allocate expensive refrigerated space to store its supply of product. The consumer also has the advantage of a product which does not require refrigeration until opened.

Shelf stability may only be achieved in two ways. First, use may be made of chemical preservatives. Alternatively, precautions must be taken to exclude the possibility of bacteria coming into contact with the product following pasteurization of the product itself.

In order to achieve shelf stability of a juice or similar liquid food product without using chemical preservatives the product must be sterilized (said to be pasteurized). Following pasteurization no bacteria must be permitted to come into contact with the product. To ensure that this is the case, all bacteria which may come into contact with the product prior to or at the time of filling and sealing of the carton, all bacteria within the carton and all bacteria in the environment which becomes trapped in the carton after sealing must be killed. Failure to do so will inevitably lead to spoilage.

With glass containers and cans a process known as post packaging sterilization has been employed to achieve shelf stability. The liquid is poured into a non-sterile container, the container is capped and sealed; the container and its contents are heated to and maintained at a sterilization temperature until all the bacteria within the container are killed; the container is then cooled; the product is then shelf stable.

This process has been used in the brewing and soft drink trade in packaging liquids in bottles and cans. It has also been used to package liquids in flexible containers. For example, U.S. patents 4,088,444 to Byrne and 2,995,418 to Muller each disclose a sterilization process wherein a container formed from flexible material such as plastic is filled with a liquid, sealed, and sterilized by first subjecting the container to a hot liquid bath or to steam until the temperature of the liquid in the containers reaches the sterilization temperature, maintaining the temperature at the sterilization temperature until sterilization is effected, and thereafter cooling the liquid in the containers by subjecting the containers to cold water. Muller in particular specifically contemplates sterilizing fruit juices which are in sealed plastic containers.

U.S. patent 4,376,126 to Evers discloses a method of making a yogurt beverage which includes the steps of pasteurization or sterilization after the beverage has been packed in a container. Evers, however, does not appear to specifically disclose the use of any particular container nor does he mention the special problems associated with gable top cartons.

U.S. patents 4,057,391 to Yamaguchi, 3,481,688 to Craig et al. and 2,380,134 to Waters disclose methods of preserving or sterilizing food in flexible containers, such as plastic containers, whereby the food is subjected to heating and then cooling after being sealed in the containers. However, these patents do not specifically teach the sterilization of liquid food products, such as fruit juices nor do they address the special problems associated with gable top cartons.

U.S. patent 237,449 to Schaumberg et al. discloses a method of preserving fruit juices in glass bottles that includes bottling and sealing the juices and thereafter heating the juices to 170°F for 35 minutes. However, Schaumberg et al. does not disclose subjecting the heated bottles to a cooling process and does not contemplate the use of plastic or plastic coated cartons nor does he address the special problems of gable cartons.

Despite the wide recognition of the usefulness of most package sterilization in other packaging systems, the process has not to the inventor's knowledge previously been used to package perishable liquids in gable top cartons.

Since the introduction in the 1950's of paper-based cartons for liquid food products, only two processes have been widely promoted in order to permit paper-based cartons to be used for packaging shelf stable products. These are the aseptic process, promoted since the early 1960's by Tetra Pak of Sweden principally in association with the so-called brick pack, and the hot fill process more recently adapted for gable top cartons from a process used in connection with glass bottles.

In accordance with the aseptic process the product is pasteurized and kept in a sterile environment up to and through the filling and sealing of the container which is pre-sterilized (generally using hydrogen peroxide and steam) and also kept in a sterile environment until filling and sealing. The seal must be hermetic under all conditions. Aseptically processed brick packs must be cut, pierced or torn to open. In each case either the opening or the re-closing is clumsy and is not considered advantageous from a consumer convenience point of view. The aseptic method is complicated to carry out and requires specialized and expensive equipment and maintenance.

Notwithstanding the complexity and cost of the aseptic process it became widely accepted in Europe, Australia and Canada in the 1970's. It was only approved in the United States in the early 1980's and has become widely accepted since that time. Prior to the introduction of the aseptic process and the brick pack there were no shelf stable products packaged in paper-based containers. The aseptically packed brick pack created a whole new application for paper-based containers. The success of the aseptically packed brick pack has been nothing short of phenomenal. It is estimated that, on a worldwide basis, aseptically packed brick packs account for over $20 billion dollars worth of liquid food products.

Because of the complexity and cost of the aseptic process, efforts were made to achieve shelf stability in paper-based containers, most desirably with the popular gable top carton, with simpler less expensive technology. In the early 1980's a so called hot fill process was proposed.

The hot fill method, a less costly alternative to the aseptic method, did not meet with much success. In accordance with the hot fill method the pasteurized product is heated to temperatures in the range of 185 degrees F and poured hot directly into the gable top carton which is then sealed. The heat of the product itself kills the bacteria remaining within the container after sealing.

In the United States the hot fill method for gable cartons was adopted by various juice packers but has largely been abandoned because this method results in a substantial vacuum being created within the container following the cooling of the product from the hot fill temperature to room temperature. This vacuum is undesirable because it promotes the inflow of bacteria from the environment through the seal which leads to quick spoilage unless the product is refrigerated. In order to deal with this problem the seal must be strong enough to withstand the significant pressure differential created by the process. The seal must also be strong enough to retain its integrity in all cases throughout the distribution process. If at any time seal integrity is lost, the vacuum will cause bacteria to enter the carton and virtually immediate spoilage to occur.

Where the seal was made sufficiently strong to prevent the entry of bacteria under all conditions, the cartons were so hard to open that consumers, used to the ease of opening of the weakly sealed gable cartons used for dairy products, resisted the container.

In practice, the strength of the seal which had to be provided to overcome the problems created by the high vacuum resulted in a significant percentage of the cartons not being readily openable by the consumer in the ordinary way. This was such a problem that International Paper, the principal proponent of the hot fill technology, developed an alternative form of opening the carton, subject of US patent No. 4,527,732 issued in 1985, which covers a scored "smile" to be pushed through by the consumer. Gable top cartons have also been constructed with a plastic cap sticking out of a roof panel of the carton.

Thus up until the present invention industry efforts to adapt the popular gable top carton to achieve shelf stability and yet retain its good opening and handling qualities all at reasonable cost have heretofore not proven successful; and this despite the fact that finding an uncomplicated and inexpensive method of achieving shelf stability with a gable top carton would open up a market worth at least several hundred million dollars for cartons alone.

Thus, there remains a need for a system for shelf stable packaging of perishable liquids which allows use of a gable top carton which can be hermetically sealed to ensure shelf stability while retaining an easily opened spout necessary for consumer acceptance.

According to a first aspect of the invention, there is provided a method of shelf stable packaging a perishable liquid food product in a gable top carton which is internally and/or externally coated with a thermo-plastic material and which includes sealing flaps which comprise side flaps and inwardly folded end flaps, the lower edge of each of said flaps being defined by a horizontal fold line where the flaps splay to form the top of the carton, each of the flaps having an upper edge, the upper edge of the side flaps extending beyond the upper edges of the end flaps, one set of which end flaps being outwardly foldable to form a spout, the method comprising the steps of:
a) ensuring that the liquid food product is free from pathogenic and thermophilic organisms;
b) filling the carton with the liquid food product maintained at substantially room temperature;
c) hermetically sealing the carton containing said liquid food product at substantially room temperature by applying heat and a first predetermined amount of pressure to predetermined portions of the sealing flaps, said predetermined portions including:
   i) a horizontal stake line extending the full length of the side flaps at a level just above the upper edge of the edge of the end flaps;
   ii) at least one vertical stake line located inwardly of at least one end of the flaps extending downward from the horizontal stake line to the horizontal fold line;
   iii) a center stake being located at the central portion of the side flaps in the vicinity of the junction of the inwardly folded end flaps, said center stake being of a size and shape sufficient to cover portions of both the end flaps and being located above the horizontal fold line said stake lines and center stake being configured and positioned and said first predetermined amount of pressure and heat applied to said stake lines and said center stake being sufficient to create hermetic seals at these portions of said sealing flaps, and applying lesser amounts of pressure to other portions of the sealing flaps, said lesser amounts of pressure being sufficient to provide a seal at these other portions that in combination with the seal provided at the stake lines and at the other stake results in an overall hermetic seal which prevents bacteria and air from entering the carton through the sealing flaps, but which said lesser amounts of pressure, if applied across both said predetermined portions and said other portions of the sealing flaps would not provide a seal sufficient to prevent bacteria and air from entering the carton through the sealing flaps; wherein the overall effect is to provide a carton that is easier to open than a carton in which all of the sealed portions of the sealing flaps have been sealed with the first predetermined amount of pressure;
d) heating the food product in the sealed carton to a temperature sufficient for pasteurization but below the softening temperature of the thermoplastic coating(s);
e) maintaining the food product at the pasteurization temperature for sufficient time to kill substantially all microorganisms remaining within the sealed carton; and
f) cooling the gable top carton and its pasteurized contents.

According to a second aspect of the present invention, there is provided a sealed gable top carton for containing a perishable liquid food product therein, the gable top carton having a gable closure which includes opposed side panels with side flaps extending therefrom and opposed end panels with end flaps extending therefrom to a lower height than the height of the flaps of the side panels, said side panels and end panels having fold lines to facilitate closing and opening, the opposed side flaps being adherable to each other and the end flaps being adherable to the lower portions of the side flaps and the flaps being sealable in first predetermined regions and second predetermined regions to have different seal strengths in said first and second regions to facilitate opening of the carton by a consumer;
each of said flaps being defined by a horizontal fold line where the flaps splay to form the top of the carton, each of the flaps having an upper edge, the upper edge of the side flaps extending beyond the upper edges of the end flaps, one set of which end flaps being outwardly foldable to form a spout; said first predetermined portions including:
i) a horizontal stake line extending the full length of the side flaps at a level just above the upper edge of the end flaps;
ii) at least one vertical stake line located inwardly of at least one end of the flaps, extending downward from the horizontal stake line to the horizontal fold line;
iii) a center stake located at the central portion of the side flaps in the vicinity of the junction of the inwardly folded end flaps, said center stake being of a size and shape sufficient to cover portions of both the end flaps and being located above the horizontal fold line, said stake lines and center stake being configured and positioned and said first predetermined amount of pressure applied to said stake lines and said center stake being sufficient to create hermetic seals at these portions of said sealing flaps,
   a first predetermined amount of pressure having been applied to said stake lines and said center stake sufficient to create hermetic seals at said first predetermined portions;
   said second predetermined regions being sealed with lesser amounts of pressure, said lesser amounts of pressure being sufficient to provide a seal at said second regions that in combination with the seal provided at the stake lines and at the center stake results in an overall hermetic seal which prevents bacteria and air from entering the carton through the sealing flaps but which said lesser amounts of pressure, if applied across both said first and second regions of the sealing flaps would not provide a seal sufficient to prevent bacteria and air from entering the carton through the sealing flaps;
   wherein the overall effect is that the carton is easier to open than a carton in which all of the sealed portions of the sealing flaps have been sealed with the first predetermined amount of pressure.

According to a third aspect of the invention, there is provided a die for sealing a heat sealable carton having a gable shaped closure, said gable shaped closure including side flaps extending from opposed side panels and end flaps extending from opposed end panels to a lower height than the flaps of the side panels, the end flaps having adjacent portions when inwardly folded to provide said closure, and at least one end panel having score lines to facilitate opening and closing one end of the carton, the die comprising a pair of jaws each of the jaws having an upper surface for pressing together the side flaps that are above the end flaps, said jaws having lower surfaces for pressing together the side flaps and folded end flaps, a recessed area in at least one of said lower surfaces to provide an area that is not firmly adhered at the center of the upper portion of said end flaps to facilitate opening of the carton and one of said jaws having a protrusion immediately below said recessed area to provide a center stake point which presses together, expands into abutment and seals said adjacent edges of the inwardly folded end flaps, said recessed area and protrusion being adapted to engage and define said first predetermined portions including:
i) a horizontal stake line extending the full length of the side flaps at a level just above the upper edge of the end flaps;
ii) at least one vertical stake line located inwardly of at least one end of the flaps extending downward from the horizontal stake line to the horizontal fold line;
iii) a center stake located at the central portion of the side flaps in the vicinity of the junction of the inwardly folded end flaps, said center stake being of a size and shape sufficient to cover portions of both the end flaps and being located above the horizontal fold line, said stake lines and center stake being configured and positioned, such that pressure applied to said stake lines and said center stake by said jaws is sufficient to create hermetic seals at these portions of the sealing flaps and lesser amounts of pressure to other portions of the sealing flaps, such lesser amounts of pressure being sufficient to provide a seal at these other portions that in combination with the seal provided at the stake lines and at the center stake results in an overall hermetic seal which prevents bacteria and air from entering the carton through the sealing flaps, but which lesser amounts of pressure, if applied across the stake lines, center stake and other portions of the sealing flaps would not provide a seal sufficient to prevent bacteria and air from entering the carton through the sealing flaps.

Embodiments of the present invention overcome the difficulties referred to earlier in adapting the gable top carton for the packaging of shelf stable liquid products such as juices in a manner acceptable to the consumer. The present invention is, to some extent, the consequence of the present inventor's recognition of a significant inter-relationship between the strength of seal necessary to maintain hermeticity and the process used to sterilize the gable top carton.

Having recognized this, the present inventor has determined that the lack of a commercially viable system for shelf stable packaging in gable top cartons is primarily due to a failure to find an acceptable compromise between hermetically sealing and ease of opening of the sealed spout of the gable top carton. These two objectives are diametrically opposed; the stronger the seal, the harder it is to open and the lesser the consumer acceptance.

The present inventor has discovered that shelf stability with a weakened seal on the gable top carton can be achieved through the selection of an appropriate post-pasteurization process combined with an appropriate seal design. A weakened seal can be used because no vacuum is created in the inventor's process otherwise a much tighter or more hermetic seal would be required. The inventor has also discovered that an adequate seal which is still easy to open can be achieved by applying increased pressure at certain empirically located critical points along the seal. If these critical points are adequately sealed, the remainder of the seal can be sealed in an easy open fashion. Other methods such as abhesives could be used but the above method is preferred. Consequently, the spout is still easy to open.

Of course, sealing at these critical points may not only be achieved with sealing jaws which apply pressure at these points, but also by other methods such as selective heating of the seal area in an appropriate pattern by the use of a laser for example.

In summary, the inventor has discovered a technique for achieving the shelf stable packaging of perishable liquids in a gable top carton which is easy to open. The technique involves the combination of a technique for sealing a liquid in a gable top carton and a process for sterilizing the interior and contents of the sealed carton. All of which is possible because no vacuum is created.

In accordance with embodiments of the present invention, the liquid food product to be packed is first pasteurized, if required, in accordance with procedures appropriate to particular product. The product is then cooled to room temperature (i.e. between 60°-80°F) and introduced into gable top cartons which are then satisfactorily hermetically sealed at the empirically determined critical points along the sealing portion of the gable top carton as described above in such a way as to permit their ease of opening for the consumer. As mentioned before there are other methods which could be used but are less adequate. The filling process is open to the environment.

The seal may be achieved with conventional heat sealing equipment using pressure jaws patterned to apply greater pressure over these predetermined areas than over the remaining areas of the seal. The same result may be achieved using planar or unpatterned jaws provided the thermoplastic in the seal area is specifically heated, for example by laser, in a pattern to achieve a strong seal in these predetermined areas. An abhesive may also be used to create such a pattern by applying it over each area of the seal except those predetermined areas.

Of course while this sealing technique is applicable when shelf stability in a gable carton is desired it may also be used effectively for products not marketed for shelf stability such as is often the case for milk if it is desired to render the carton easy to open and yet sufficiently sealed to prevent leaks.

The sealed cartons are then heated to and held for an appropriate time at a post-pasteurization temperature appropriate to kill the environmental bacteria, mold and yeast remaining within the product and within the carton but at a temperature below that which would melt the inner plastic layer of the carton or cause delamination of the carton. Generally a post-pasteurization temperature in the range of about 160°F (71°C) is appropriate with a preferred temperature of about 167° (75°C) with a holding time of about 10 minutes. The cartons are then cooled.

Because the contents were originally sealed in the carton at room temperature and returns to room temperature after being heated, no vacuum is created (i.e. no pressure differential across the seal) and thus there is no danger that environmental bacteria will be drawn into the carton in the event the integrity of the seal is subsequently lost. While the seal is hermetic, it need not be as strong as that required if the hot fill process were used and is therefore more acceptable to the consumer because the carton remains easy to open.

Embodiments of the present invention offer significant advantages over the hot fill method. With embodiments of the present invention the desirable easy opening characteristics of the gable top carton may be retained which is not possible with the hot fill method because the seal must be very strong in order to overcome the pressure differential across the seal created by that process. In the event that seal integrity is lost or a leak occurs in a container packed by the hot fill method, the internal vacuum will immediately draw harmful micro-organisms into the container which will lead to spoilage. With the present invention, because there is no vacuum in the head space above the liquid in the carton, a minor break in the seal or leak elsewhere will not result in micro-organisms being drawn into the carton and thus spoilage will be avoided.

As compared with the aseptic process, embodiments of the present invention require much less sophisticated equipment which is both less costly and easier to operate. It is estimated that, taking into account capital costs and operating costs, embodiments of the present invention can be worked for approximately 50% of the cost of the aseptic process in operations of a certain size. Embodiments of the present invention are also more secure than the aseptic process. Packing in the aseptic process must be done in an entirely aseptic environment. If, because of equipment or operator problems, any bacteria should find its way into the product or the container after they have been separately sterilized and before the package is sealed, then spoilage will occur. Embodiments of the present invention permit the filling to be done in an open environment because the bacteria is killed after the package is sealed and no further opportunity for bacteria to enter the carton occurs.

Another advantage of embodiments of the present invention over the aseptic process is that a sterilizing agent such as hydrogen peroxide is not required. With the aseptic process it is always possible that traces of hydrogen peroxide remain on the inside surface of the container and contaminate the product. The use of hydrogen peroxide also presents a problem for workers packing the product. If for any reason the ventilation system required to evacuate hydrogen peroxide vapours should not operate properly, the atmosphere in the packing area may very quickly become contaminated and pose a health hazard to the workers. Embodiments of the present invention present no such danger.

### BRIEF DESCRIPTION OF THE DRAWINGS

FIG. 1 is a perspective view of a conventional gable top carton having an arrangement in a closed state;
FIG. 2 is a perspective view of the package of FIG. 1 in an open state;
FIG. 3 shows part of a blank for making a gable top carton;
FIG. 4 is a perspective view of a gable top carton according to the present invention;
FIG. 5 shows the carton of FIG. 4 partially opened;
FIG. 6 shows the carton of FIGS 4 and 5 opened up to show the heat sealed areas.
FIG. 7 is a view of a die used to seal the carton of FIGS. 4 and 5.
FIG. 8 is a perspective view of a gable top carton in accordance with another embodiment of this invention illustrating the opening of the carton;
FIG. 9 is a perspective side elevation view of the female potion of a die for producing the embodiment of FIG. 8; and
FIG. 10 is a perspective side elevation view of the male portion of a die for producing the embodiment of FIG. 8.
FIG. 11 is a perspective view of an improved male jaw for sealing a gable top carton;
FIG. 12 is a perspective view of an improved female jaw for sealing a gable top carton;
FIG. 13 is a cut-away view of a gable top carton;
FIG. 14 is a side view of the top of a gable top carton.

### MODES FOR CARRYING OUR THE INVENTION

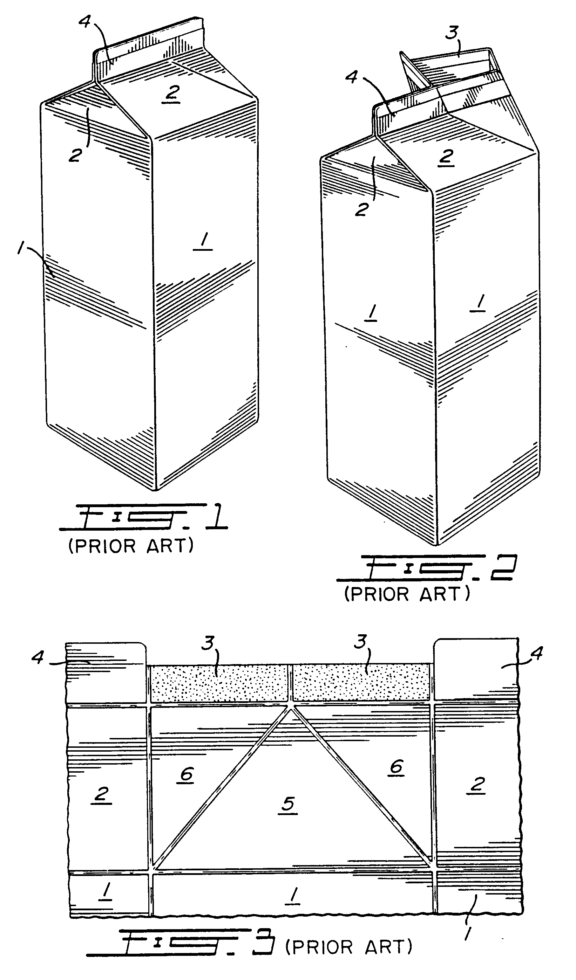

FIGS. 1-3 show a conventional gable top carton construction.

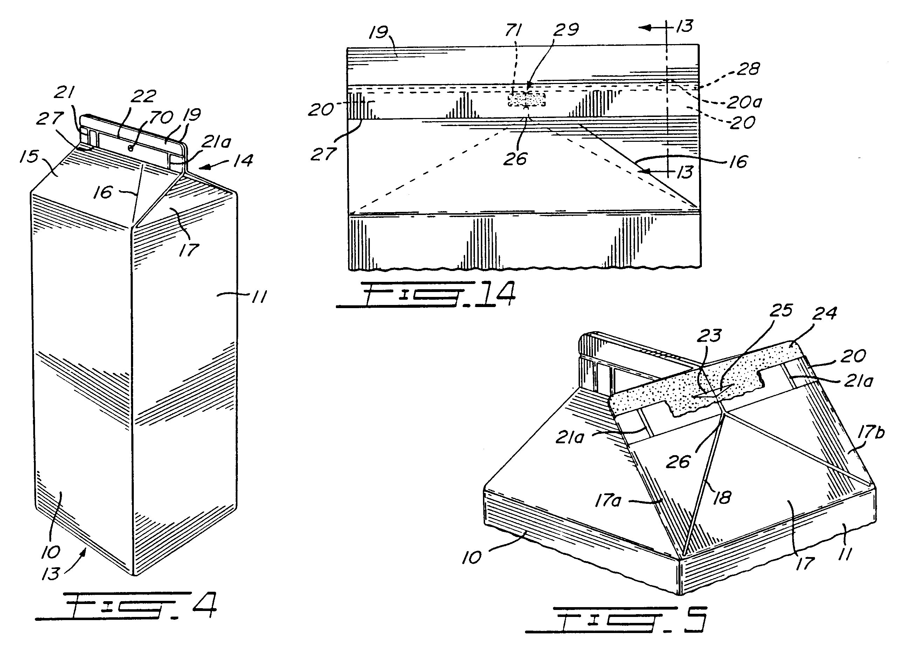

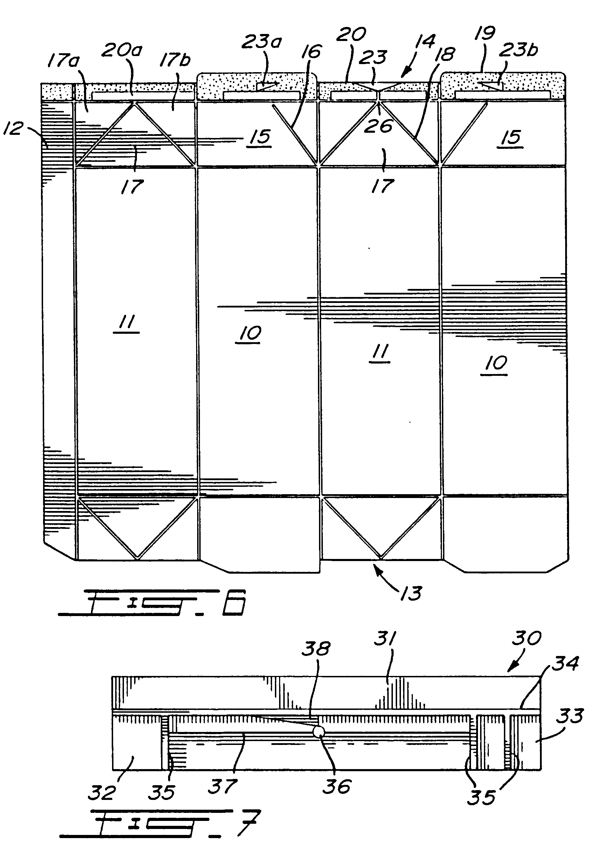

The package shown in the drawings has four sidewalls 1 and a bottom (not shown). Furthermore, the package has four end wall portions 2 which are united on one hand with the sidewalls 1 and on the other with each other. At the upper free margin, the end wall portions 2 are provided with marginal portions 3 and 4 which are folded toward each other in such a way that opposite end wall portions 2 are inclined in pairs toward each other and that the marginal portions 3 of two opposite end wall portions lie folded like bellows between the marginal portions 4 of the two remaining end wall portions. Thus, the end wall portions 2 which are provided with the inwardly folded marginal portions 3, will, as shown in FIG. 3, be divided into three essentially triangular portions, the intermediate one 5 of which extends between the end wall portions 2 provided with the outer marginal portions 4, while the two side portions 6 rest against the inside of each of each one of these.

The gable top carton is constructed from sheets of material which include at least a basic outer layer of cardboard and an inner layer of thermoplastic material. Normally, the sheet is entirely plastic coated and can include additional barrier layers. The preferred structural material of the present invention is in five layers, namely, an inner coating of polyethylene and aluminum (or other satisfactory barrier material) barrier, another polymeric layer to bond the foil, a layer of paper board and an outer layer of polyethylene or lacquer. A sixth layer, usual for hot filling methods, is not needed with the present invention. Suitable plastics for the carton also include vinyl resins, such as polyvinyl chloride, regenerated cellulose, polypropylene, polyethylene terephalate, polycarbonates and other plastics that are used for food products. Where a barrier layer is to be used, ethyl vinyl alcohol or like barrier film may be substituted for foil. The sealing of the package with the marginal and end wall portions in the position shown and described is brought about by means of heat, which will fuse the thermoplastic layers within the sealing zone.

When the package is to be opened, the seal is torn open over one half of the sealing zone, whereupon the inwardly folded marginal portion located in said zone is pulled out to the position shown in FIG. 2, where the marginal and the end wall portions will form a pouring spout.

FIG. 3 shows part of a blank for a package of the indicated kind. The drawing shows essentially only that part of the blank which is to form the inside surface of the marginal and end wall portion of the package, which can be opened. The blank is provided with fold or score lines along which the blank is to be folded as to form the finished package.

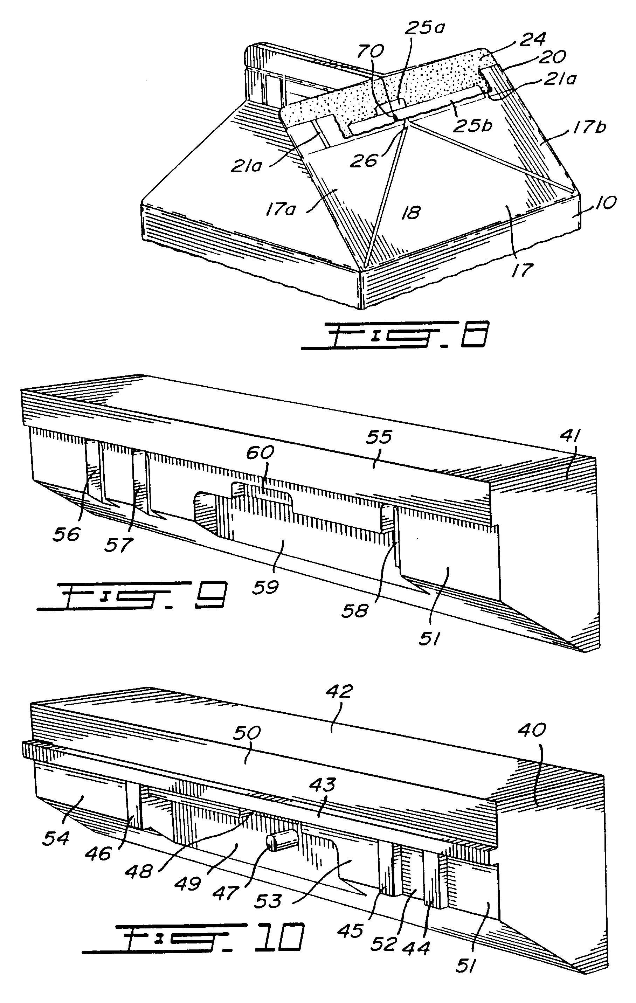

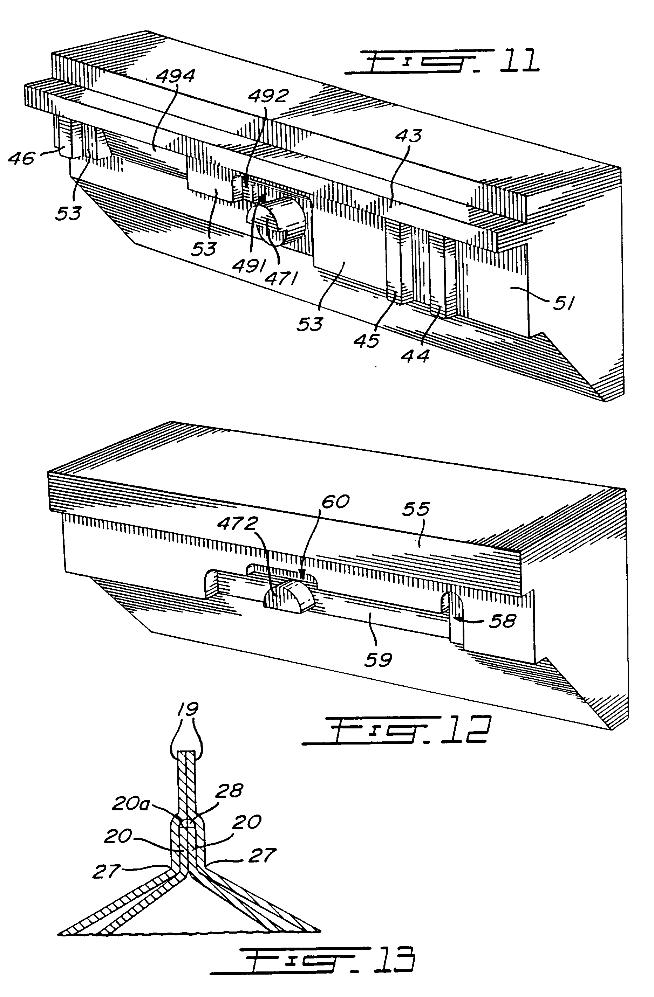

Referring now to FIGS. 4 and 6, the carton illustrated is mainly of conventional construction. It includes opposed pairs of side walls 10 and 11, connected by a fifth panel 12. There is a bottom closure 13 and a gable top generally indicated at 14. The gable top includes a pair of side panels 15 having fold or score lines 16 to facilitate opening and a pair of end panels 17 having fold or score lines 18. A pair of top or side flaps 19 are extensions of side panels 15 and extend somewhat higher than end flaps 20 that are an extension of end panels 17. Side flaps 19 are heat sealed in face to face relationship as shown. Flaps 19 and 20 splay at horizontal fold line 27 to form the top of the carton. End flaps 20 are heat sealed to the interior of the lower parts of side flaps 19 as shown in FIG. 5.

Both in the case of hot fill and for non-shelf stable packed juices and dairy products flaps 19 and 20 are sealed over their entire surfaces. It is also known to provide further additional optional sealing such as a pair of vertical stake lines 21 at the end that is not to be opened and which coincides with the fifth panel 12. Optionally, at the other end there is stake line 21a. There may also be a horizontal stake line 22 extending across the side flaps 19. Stake lines are strongly indented to give a more secure seal. There may also be a center stake point 70 which presses together, expands into abutment and seals the adjacent edges of the inwardly folded end flaps 20. The foregoing is conventional structure.

The present inventor has discovered that, in combination with an appropriate post-pasturization process, the said optional sealing areas are the truly critical ones. If these are made then it is not necessary to seal flaps 19 and 20 uniformly over their entire surfaces. Having realized this the present inventor empirically discovered what specific areas other than the critical areas should be sealed and the extent of such seal in order to achieve the desired easy opening characteristic in a shelf stable gable top carton.

Since sealing at the critical areas is sufficient to ensure that, in combination with the post-pasturization process selected, the seal will in a commercially acceptable percentage of cases keep bacteria out of the carton, the non-critical areas, i.e., the areas which are not staked, can be selectively sealed lightly or not at all to make the carton easy to open. One such construction is shown in FIGS. 4-6.

The difference from conventional structure according to this embodiment is in the area of the seal between side flap 19 and end flap 20. According to conventional practice in the case of hot fill, the whole of the interior of end flaps 20 are sealed to side flaps 19. According to this invention an area which may be in the shape of an inverted triangle or a notch or a sector is left unsealed or lightly sealed at the top center of end flap 20 as indicated by the numeral 25 in the broken away part of FIG. 5. The remaining sealed area is stippled and indicated at 24. In FIG. 6 the unsealed or lightly sealed area is shown at 23a and 23b which combine to provide area 23 when the carton is closed. It has been found that, particularly when the stake point 70 is located at the apex of triangle 25, an effective seal is provided in spite of this unsealed or lightly sealed area. The unsealed area at the top center enables the consumer to start opening the carton and also results in there being less seal to pull apart where the consumer has the least leverage. This arrangement is considered useful feature because the area of the flaps at the unsealed or lightly sealed area tends to pop out and thus greatly facilitates opening.

FIG. 7 illustrates the male jaw of a suitable die 30 including die face portion 31 for pressing together the upper part of side flaps 19, die face portions 32 and 33 for the ends and horizontal stake embossing line 34, vertical stake embossing lines 35 and embossing protrusion 36 for the center stake point. Die face portion 37 which presses flaps 19 and 20 together is cut away at 38 to leave a triangular unsealed or lightly sealed area. This can be used with a matching female die.

Alternatives for providing the desired unsealed area would include the use of silicone as a parting agent or "abhesive" to prevent adhesion in area 25. Another possibility if adhesives were used in place of specifically made heat sealing jaws would be to omit adhesive in area 25. These methods are generally more expensive and less reliable because of the risk of misalignment of the parting agent to the desired non-adhering area. Thus, heat sealing with specially patterned jaws is the preferred method of closure where, as usual, the carton is coated internally with a thermoplastic resin.

FIG. 8 illustrates an improved structure which is similar to that illustrated in FIGS. 4 to 6 but showing an unsealed or lightly sealed area at the top of flap 20 immediately above stake point 70 substantially in the shape of a rectangle 25a instead of the triangle of FIG. 5 and showing a further unsealed or lightly sealed area 25b extending between stake point 70 and vertical stake line 21a. Areas 25a and 25b are left unsealed or are lightly sealed by providing a die which applies no pressure or little pressure in these areas.

The construction of a suitable die is illustrated in FIG. 9 showing female jaw 41 and FIG. 10 showing male jaw 40. Referring now to FIG. 10, male jaw 40 has a die face 42 having a raised longitudinal rib 43 to provide a horizontal stake line and vertical ribs 44 and 45 to provide vertical stake lines on the side of the container that is to remain sealed and a vertical rib 46 to provide a vertical stake line on the spout end of the carton (i.e. the end that is to be opened). Male jaw 40 has a set screw 47 to provide a central stake point 70. The generally rectangular relieved area 25a of FIG. 8 is provided by depressed area 48 immediately above set screw 47 and offset in the direction of the side of the carton that is to be opened. A relieved area 49 is also provided extending from set screw 47, which provides center stake point 70, to rib 46 which provides vertical stake line 21a. Male jaw 40 also includes area 50 for sealing side flaps 19 of the carton and areas 51, 52, 53 and 54 for sealing the remainder of end flaps 20.

Female die 41 shown in FIG. 9 has an upper area 55 which mates with portion 50 of the male jaw and a slightly undercut area 51 the upper edge of which is located to accomodate rib 43. Die 41 has slots 56 and 57 to accomodate ribs 44 and 45 and slot 58 to accomodate rib 46. It also has a depressed area 59, to relieve pressure, matching area 49 of the male die and generally rectangular pressure relieving area 60 matching area 48 of the male die.

FIGS. 11 and 12 show an even further improvement of the male and female jaws respectively. The jaw construction shown therein is similar to that shown in FIGS. 9 and 10 where similar reference numerals are used. However, there are several differences which have been empirically found to yield better results. The differences reside in the region below the longitudinal rib 43 and between rib 45 and rib 46. It should be noted that in all of FIGS. 9-12, the depth of the depressions relative to one another is exaggerated for emphasis. In FIG. 11, the set screw 47 used to define the stake point in the jaws shown in FIG. 10 is replaced with a protrusion 471 which may be of semi-circular shape as shown. The protrusion 471 is in fact recessed from the longitudinal rib 43 but extends out generally as far as the ribs 44, 45 and 46. The male jaw also includes a recessed portion 53 like that of male jaw shown in FIG. 10, but the recessed portion 53 includes an inclined recess portion 494 recessed at an angle of about 30° to 40° with one edge contacting the recessed surface 53 and one edge extending significantly below that surface. Another surface 492 is recessed from the recess surface 53 and, optionally, a further recessed portion 491 is recessed from the portion 492.

The female jaw shown in FIG. 12 is similar to the female jaw 41 shown in FIG. 9 with the exception of modification made in the depressed area 59. Specifically, in the modified jaw, the depressed area 59 is significantly depressed. From this depressed area are provided a number of areas which are less depressed, i.e., protrude from the depressed area 59. These include the areas 60 and 58 and a protruding area 472 which is adapted as a stake plate for protrusion 471 in the male jaw to provide a heavily staked area.

A protrusion such as 36, 47 or 471 is necessary to create a center stake which will block the natural path bacteria might follow to enter the carton. This path would be from the edge of the carton along a channel 28 just above the upper edges 20a of end flaps 20 as shown in FIGS. 13 and 14 and down into the carton between the folding points of end flaps 20 where a natural gap 29 occurs. Accepted practice dictates that the larger the center stake in the gap region 29 the better.

The present inventor has discovered that to ensure the easy open characteristic desired the center stake should be optimally placed below and as close to the upper edge of the end flaps as possible with a shape and area sufficient to adequately close the gap 29 and no more such as shown at 71 in FIG. 14. The present inventor has further discovered that if this is done and area 26, being the intersection of the fold or score lines on panel 17, is left substantially unaffected by the center stake, this area will "pop" out during the opening process and greatly facilitate the opening of the carton. It is believed that this arrangement allows sub-panels 17a and 17b to toggle effectively without distortion and thus bring greater force to bear in breaking the seal.

Although the location and dimensions of the stake areas and the corresponding design of the jaws have been derived empirically, it has been found that generally the critical areas are those areas necessary to ensure a minimum complete seal of the flaps. Further, it has been found that, by relieving sealing pressure immediately adjacent to critical areas, improved sealing is achieved. Specifically, when the areas immediately adjacent the critical areas are relieved the force applied by the jaws to seal the flaps occurs at the reduced area, i.e. only at the critical areas. Accordingly, when a constant amount of pressure is applied to the jaw, the provision of a recessed area decreases the area of contact upon which high pressure is applied and thus increases the sealing pressure per unit of area over the critical areas; as a result, a stronger seal without an increase in pressure applied to the jaws.

Traditionally, gable top cartons were heat sealed evenly across the flaps by flat non-patterned planar jaws. The practice then developed to further strengthen the seal by adding horizontal and vertical stakes and a center stake. It is believed that until the present invention, it was not understood that, so long as a process could be developed which would not create any significant pressure differential across the seal, a practical seal could be achieved by relying principally on the sealing effect of the horizontal, vertical and center stakes. With this realization it became possible to relieve sealing pressure, and thus the bond strength between the flaps forming the seal, over those other areas which would significantly improve the opening characteristics of the carton.

The sealing of the gable top carton can be accomplished by employing the techniques described above so as to ensure a strong seal at certain critical areas while maintaining an easy to open carton. To ensure the this seal is adequate to ensure shelf stability, however, the contents must be sterilized or pasteurized in such a way that a stronger seal is not required and additional forces are not applied to the seal. As noted above, this means that the so-called hot fill method of pasteurization is not acceptable because it results in a vacuum which requires a stronger seal.

The present inventor has discovered that by combining the sealing technique described above with the following post-packaging pasturization process which does not lead to the creation of a vacuum in the gable top carton, traditional gable top cartons can be used to package shelf stable liquid products and simultaneously retain their easy opening characteristic required in order to achieve consumer acceptance.

It is believed that no such practical process has previously been developed for post-packaging pasteurization in easy to open gable top cartons constructed of plastic or paperboard coated with plastic.

In accordance with one aspect of this invention, the method of providing liquid food products that are shelf stable in easy to open gable top cartons comprises the steps of:
(a) cold filling a plastic coated gable top carton with an essentially non-carbonated liquid food product free from pathogenic and thermophilic organisms;
(b) sealing the carton as described above;
(c) heating the food product in the carton to a pasteurization hold temperature in the range of about 160° F and preferably 167° F but below the softening temperature of the plastic;
(d) maintaining the food product at the pasteurization hold temperature for sufficient time to provide an adequate kill of the bacteria remaining within the carton; and
(e) cooling.

The food products to which this invention is applicable are those which are generally pourable and could be advantageously packaged in gable top cartons, including, for example, liquid dairy products, non-carbonated fruit products such as the citrus products or citrus flavored products, fruit products, vegetables juices and vegetable cocktails. Carbonation must be avoided as otherwise the pressures that would be generated in the carton during the process would be too high.

Another requirement of the food product is freedom from pathogenic and thermophilic bacteria. Most juices and drinks have pH's in the range 2.8 - 4.0 and not above pH 4.6. At a pH above 4.6 there is a potential problem of pathogenic bacteria. Below pH 4.6 the problems are yeast, molds and bacteria.

If the pH is above 4.6, which would include such products as milk, then there should be a preliminary ultra high temperature treatment at 240°F to 260°F for 15-20 seconds to kill pathogenic organisms, followed by cooling to ambient temperature. A preliminary ultra high temperature treatment is advisable with some vegetable base products such as tomato, due to their initial high content of thermophilic molds.

The juices and drinks to which this process is applicable are formulated in a tank at ambient temperatures in the range 40° - 75°F and pretreated as discussed above if necessary. They are then pumped to a filling station where the juice or drink is fed into cartons.

Although not essential, it may be useful to provide a sparging infusion valve in the line berween the tank and filling station. The sparging infusion valve is used to add up to about 0.1 lbs/square inch of nitrogen or carbon dioxide, and preferably about 0.01 lbs/square inch. The purpose of sparging is to create a slight positive pressure to oppose the entrance of any bacteria into the carton after filling. Carbon dioxide is preferred for this purpose. The product sparged with carbon dioxide would have such a small amount of carbon dioxide that it would not be classified as a carbonated product.

At the filling station which is of conventional type, a number of individual cartons are filled cold. The temperature of the liquid food product should be less than 80°F and desirably less than 70°F to achieve a neutral or positive pressure after filling. This may be contrasted with hot fill temperatures of the order of 180°F. The maximum temperature that can be used depends on the conditions including the positive pressure from any sparging gas and on the strength of the seal. After filling and closing the cartons there should be a neutral to slightly positive pressure. As previously indicated a vacuum is undesirable.

The cold filled cartons are transferred to a processor comprising three zones, a preheat zone, a hold zone, and a cool zone.

The processor may be in the form of a continuously moving chain upon which rows of cartons are placed. The cartons are spaced to allow water to run down the sides of the cartons to heat or cool the contents. Heating may also be achieved in other ways such as the use of microwave energy provided no metal is used in the carton structure.

### 1. Preheat zone

The cold filled cartons are preheated preferably by pouring water at a temperature of 180°F - 185°F onto the cartons and allowing it to cascade down the sides. After a period of time that varies with the size of the carton, viscosity, solids content, etc., the liquid product within it reaches the desired "pasteurization hold" temperature. The preferred temperature for "pasteurization hold" is about 167°F, which will be reached in about 13-19 minutes in the case of 1 liter cartons. Two liter cartons would take 20 to 24 minutes to reach this temperature, while 4 to 7 minutes would be adequate for 250 ml. cartons. If microwave energy were used to heat the product, the time to reach the pasteurization temperature may be different.

### 2. Hold zone

The product is maintained at the required pasteurization temperature for a predetermined time to ensure adequate kill of all microorganisms. The appropriate time at various "pasteurization hold" temperatures is available from standard texts. At the preferred temperature of 167°F a hold time of ten minutes is recommended. The temperature should not be greater than about 174°F, at which the time will be about 4 minutes, as otherwise there may be problems with softening of the plastic where the carton is polyethylene and delamination of foil from paperboard will occur. Slightly higher temperature may be used with plastics having a higher softening point such as polypropylene. At lower temperatures the hold time is quite long. For example, at 160°F it would be about 25 minutes.

### 3. Cool zone

After holding for the required amount of time, the cartons go into a cooling zone which, if water chilled, may exit at around 90°F to 105°F. This temperature is desirable as it will quickly evaporate off any excesss moisture adhering to the carton.

The temperature of the cooling water may be about 35°F to 60°F. The cartons then leave the processor and are packed in cases.

The process is further illustrated by the following examples:

### Example 1

This example relates to the production of 1000 Imperial gal. of single strength (ready to drink) orange juice. 135 gal. of orange juice concentrate 65 Brix (% soluble solids) is added to 865 gal. of water and blended for 10 minutes. It is then pumped using positive pumps through a line leading to a filler. The line includes a sparging infusion valve to sparge carbon dioxide to give an end product with about 0.1 lbs/square inch of gas. At the filler the carton is filled at a temperature of about 70°F into one liter gable top cartons which are heat sealed in accordance with the sealing technique described above. The cartons are brought up to a temperature of 167°F in 14 minutes and held at that temperature for 10 minutes. They are then chilled with water at 40°F for 12 minutes to give an exit temperature of 90°F. The orange juice has a desirable shelf life of three months and a recommended maximum of six months. The taste of the orange juice is markedly better than that produced by hot filling.

### Example 2

This example relates to a tomato and clam juice cocktail. A thousand imp. gal. batch was made of water and 100 imp. gal of tomato paste (32-34 brix) 650 lbs of salt; 60 lbs of monosodium glutamate; 700 lbs of glucose solids; 30 lbs of spices and 10 gal. of clam broth. It is pumped to a pasteurizer where the product is brought to a temperature of 250°F in about 10-20 seconds, and held at this temperature to 48 to 52 seconds, cooled at 70°F and then filled and processed as described in Example 1.

### Example 3

This example relates to the packaging of milk in a shelf stable easy to open gable top carton. The milk is first pasteurized at a conventional UHT temperature such as 250° F for approximately 8 seconds then immediately cooled to ambient temperature. The milk is then cold filled into gable top cartons in the normal manner under stringent sanitary conditions and then sealed and processed as described in Example 1.

## Claims

1. A method of shelf stable packaging a perishable liquid food product in a gable top carton which is internally and/or externally coated with a thermoplastic material and which includes sealing flaps which comprise side flaps (19) and inwardly folded end flaps (20), the lower edge of each of said flaps being defined by a horizontal fold line (27) where the flaps splay to form the top of the carton, each of the flaps having an upper edge, the upper edge of the side flaps (19) extending beyond the upper edges of the end flaps (20), one set of which end flaps (20) being outwardly foldable to form a spout, the method comprising the steps of:
a) ensuring that the liquid food product is free from pathogenic and thermophilic organisms;
b) filling the carton with the liquid food product maintained at substantially room temperature;
c) hermetically sealing the carton containing said liquid food product at substantially room temperature by applying heat and a first pre-determined amount of pressure to predetermined portions of the sealing flaps, said predetermined portions including:
i) a horizontal stake line (22) extending the full length of the side flaps (19) at a level just above the upper edge of the edge of the end flaps (20);
ii) at least one vertical stake line (21) located inwardly of at least one end of the flaps extending downward from the horizontal stake line (22) to the horizontal fold line (27);
iii) a center stake (70) located at the central portion of the side flaps (19) in the vicinity of the junction of the inwardly folded end flaps (20), said center stake (70) being of a size and shape sufficient to cover portions of both the end flaps (20) and being located above the horizontal fold line (27), said stake lines (21, 22) and center stake (70) being configured and positioned and said first predetermined amount of pressure and heat applied to said stake lines (21, 22) and said center stake (70) being sufficient to create hermetic seals at these portions of said sealing flaps (19, 20), and applying lesser amounts of pressure to other portions of the sealing flaps (19, 20), said lesser amounts of pressure being sufficient to provide a seal at these other portions that in combination with the seal provided at the stake lines (21, 22) and at the other stake (70) results in an overall hermetic seal which prevents bacteria and air from entering the carton through the sealing flaps (19, 20), but which said lesser amounts of pressure, if applied across both said predetermined portions and said other portions of the sealing flaps (19, 20) would not provide a seal sufficient to prevent bacteria and air from entering the carton through the sealing flaps (19, 20); wherein the overall effect is to provide a carton that is easier to open than a carton in which all of the sealed portions of the sealing flaps (19, 20) have been sealed with the first predetermined amount of pressure;
d) heating the food product in the sealed carton to a temperature sufficient for pasteurization but below the softening temperature of the thermoplastic coating(s);
e) maintaining the food product at the pasteurization temperature for sufficient time to kill substantially all microorganisms remaining within the sealed carton; and
f) cooling the gable top carton and its pasteurized contents.

2. A method as claimed in claim 1, in which the said other portions over which less pressure is applied include a first area between the upper edge of the end flaps (20) and the horizontal fold line (27) which area extends from the center stake region outwardly toward the spout end of the carton.

3. A method as claimed in claim 2, wherein the first area extends from the center stake region outwardly approximately one third the distance toward the spout end of the carton.

4. A method as claimed in claim 2, in which the center stake (70) is located above a point mid-way between the upper edge of the end flaps (20) and the horizontal fold line (27).

5. A method as claimed in claim 2, in which the first area is in the shape of a triangle (25) tapering towards the spout end of the carton.

6. A method as claimed in claim 2, 3 or 5, in which pressure is further relieved over a second area extending below the upper edge of the end flaps (20) between the center stake (70) and the vertical stake (21) on the spout end of the carton.

7. A method as claimed in claim 6, in which the pressure over the second area is relieved progressively from the horizontal stake line (22) down.

8. A method as claimed in claim 6 or 7, wherein said second area is centered approximately two thirds of the way between the center stake (70) and the vertical stake (21) on the spout side of the carton.

9. A method as claimed in any preceding claim, wherein heat and pressure are applied to the side flaps (19) to soften the external thermoplastic coating so that the side flaps (19) adhere to each other and the end flaps (20) adhere to the lower portions of the side flaps (19) and to the upper portion of an end flap (20) to form said easily opened seal.

10. A method as claimed in any preceding claim, wherein heat and a first amount of pressure are applied to predetermined critical areas of the side flaps (19) to soften the thermoplastic external coating such that these critical areas adhere to each other and the end flaps (20) adhere to the lower portions of the side flaps (19) and a second amount of pressure is applied, which is less than the first amount of pressure, to other, non-critical, areas of the flaps (19, 20) so as to leave areas which are lightly sealed at the center of the upper portion of the end flaps (20) to facilitate opening of the carton by a consumer.

11. A method as claimed in any preceding claim in which the pasteurization hold temperature is in the range of 160 F to 174 F (71-79°C).

12. A method as claimed in claim 11, in which the pasteurization hold temperature is about 167 F (75°C).

13. A method as claimed in claim 12, in which the food product is maintained at a pasteurization hold temperature of about 167 F (75°C) for about 10 minutes.

14. A method as claimed in any preceding claim in which the thermoplastics material is polyethylene.

15. A method as claimed in any preceding claim, wherein the liquid food product contains no artificial preservatives.

16. A method as claimed in any preceding claim, wherein the temperature of the liquid food product at the time of filling into the carton is in the range of 60-80 F (16°C-27°C).

17. A method as claimed in any preceding claim, wherein the liquid food product is filled into the carton in an environment which is open to the atmosphere.

18. A method as claimed in any preceding claim, comprising the steps of:
a) folding the end flaps (20) along a vertically extending center line region such that a first half of the outer surface of each end flap (20) is folded on to the other half thereof and the inner surface of each end flap (20) is folded against inner surfaces of adjacent side flaps (19) so that the center line region of the opposed end flaps (20) are adjacent one another and separated by as small a vertical gap (29) as possible, said small vertical gap (29) being bounded by the opposed end flap (20) center line regions and inner surfaces of opposed side flaps (19);
b) attaching at least a portion of the inner surface of each end flap (20) to the inner surface of the side flap (19) it is folded against; and
c) forming said seal across the upper portion of said gap so as to seal said gap (29) without sealing the lower portion of said gap (29) so as to provide a pop out closure.

19. A method as claimed in any preceding claim, wherein the liquid food product remains shelf stable without refrigeration for at least three months.

20. A method as claimed in any preceding claim, wherein after pasteurization, the food product is cooled by chilled water to a temperature of about 90-105F (32-41°C).

21. A sealed gable top carton for containing a perishable liquid food product therein, the gable top carton having a gable closure which includes opposed side panels (15) with side flaps (19) extending therefrom and opposed end panels (17) with end flaps (20) extending therefrom to a lower height than the height of the flaps (19) of the side panels (15), said side panels (15) and end panels (17) having fold lines (16, 18) to facilitate closing and opening, the opposed side flaps (19) being adherable to each other and the end flaps (20) being adherable to the lower portions of the side flaps (19) and the flaps (19, 20) being sealable in first predetermined regions and second predetermined regions to have different seal strengths in said first and second regions to facilitate opening of the carton by a consumer; each of said flaps (19, 20) being defined by a horizontal fold line (27) where the flaps (19, 20) splay to form the top of the carton, each of the flaps (19, 20) having an upper edge, the upper edge of the side flaps (19) extending beyond the upper edges of the end flaps (20), one set of which end flaps being outwardly foldable to form a spout; said first predetermined portions including:
i) a horizontal stake line (22) extending the full length of the side flaps (19) at a level just above the upper edge of the end flaps (20);
ii) at least one vertical stake line (21) located inwardly of at least one end of the flaps (19, 20) extending downward from the horizontal stake line (22) to the horizontal fold line (27);
iii) a center stake (70) located at the central portion of the side flaps (19) in the vicinity of the junction of the inwardly folded end flaps (20), said center stake (70) being of a size and shape sufficient to cover portions of both the end flaps (20) and being located above the horizontal fold line (27), said stake lines (21, 22) and center stake (70) being configured and positioned and said first predetermined amount of pressure applied to said stake lines (21, 22) and said center stake (70) being sufficient to create hermetic seals at these portions of said sealing flaps (19, 20);
a first predetermined amount of pressure having been applied to said stake lines (21, 22) and said center stake (70) sufficient to create hermetic seals at said first predetermined portions;
said second predetermined regions being sealed with lesser amounts of pressure, said lesser amounts of pressure being sufficient to provide a seal at said second regions that in combination with the seal provided at the stake lines (21, 22) and at the center stake (70) results in an overall hermetic seal which prevents bacteria and air from entering the carton through the sealing flaps (19, 20) but which said lesser amounts of pressure, if applied across both said first and second regions of the sealing flaps (19, 20) would not provide a seal sufficient to prevent bacteria and air from entering the carton through the sealing flaps (19, 20);
wherein the overall effect is that the carton is easier to open than a carton in which all of the sealed portions of the sealing flaps (19, 20) have been sealed with the first predetermined amount of pressure.

22. A gable top carton as claimed in claim 21, wherein the perishable liquid food product is fillable into the carton at about room temperature before the carton is sealed, heated to a pasteurization hold temperature after sealing and maintained at the pasteurization hold temperature for a time sufficient to pasteurize the product and sterilize the interior of the carton.

23. A gable top carton as claimed in claim 21 or 22, in which the flaps (10, 20) are adhered by heat sealing.

24. A gable top carton as claimed in any one of claims 21 to 23, wherein said seal is formed by applying varied pressure across the flaps (19, 20) so that different regions of the flaps (19, 20) are sealable with different amounts of pressure to provide a strongly sealed area and a first lightly sealed area at the center of and at the upper portion of an end flap (20).

25. A gable top carton as claimed in claim 24, in which the lightly sealed area is in the shape of a triangle (25).

26. A gable top carton as claimed in claim 24 or 25, wherein the center stake (70) is immediately below the lightly sealed area.

27. A gable top carton as claimed in claim 24, 25 or 26, wherein a second lightly sealed area is provided in the end flap (20) having the first lightly sealed area, said second lightly sealed area extending along the lower portion of the end flap (20) from substantially the center to a point spaced from the outer edge.

28. A gable top carton as claimed in any of claims 21 to 27, in which the interior and/or exterior of the carton is coated with thermoplastic material.

29. A gable top carton as claimed in claim 28, wherein the external thermoplastic coating softens at a predetermined temperature, and the pasteurization temperature is below the predetermined temperature at which the carton's external surface layer softens.

30. A gable top carton as claimed in any one of claims 21 to 29, wherein the closure is sealed by forming a seal across the flaps (19, 20) such that the carton is hermetically sealed so that the area of the flaps (19, 20) immediately adjacent an intersection of score lines in (18) is unsealed or lightly sealed so that during opening, this area will pop out to facilitate opening of the carton, said scorelines (18) being on at least one end panel (17) at a point corresponding to the tip of a pouring spout from which the end panels (17) extend.

31. A gable top carton as claimed in claim 30, wherein the carton is sealed by applying heat and a first amount of pressure to predetermined areas of the opposed side flaps (19) and end flaps (20) to cause these areas of the opposed side flaps (10) to adhere to each other and these areas of the end flaps (20) to adhere to the lower portions of the side flaps (19) and applying a second amount of pressure, which is less than the first amount of pressure, to other areas of the flaps (19, 20) so as to leave areas which are lightly sealed at the center of the upper portion of the end flaps (20) to facilitate opening of the carton by a consumer and wherein the area of the flaps (19, 20) immediately adjacent the intersection of the score lines is left substantially unsealed.

32. A gable top container as claimed in any one of claims 21 to 31, wherein the side flaps (19) and the end flaps (20) each have an inner surface and an outer surface, and the end flaps (20) are folded along a fold line (18) such that a first portion of the outer surface of each end flap (20) is in planar contact with another portion of the outer surface of the flap (20) and the inner surfaces of each of said end flaps (20) being sealed to the inner surfaces of the said flaps (19) and the fold lines (18) of each of the opposed end flaps (20) being adjacent and separated from one another by a vertically extending gap bounded by the portions of the inner surfaces of the end flaps (20) and side flaps (19) and the upper portion of the gap being sealed from the upper edge of the end flaps (20) to a point above the vertical midpoint of the end flaps (20) and the lower portion of the gap being substantially unsealed.

33. A die (30) for sealing a heat sealable carton having a gable shaped closure, said gable shaped closure including side flaps (19) extending from opposed side panels (15) and end flaps (20) extending from opposed end panels (17) to a lower height than the flaps (19) of the side panels (15), the end flaps (20) having adjacent portions when inwardly folded to provide said closure, and at least one end panel (17) having score lines (18) to facilitate opening and closing one end of the carton, the die (30) comprising a pair of jaws (40, 41) each of the jaws (40, 41) having an upper surface (31, 50, 55) for pressing together the side flaps (19) that are above the end flaps (20), said jaws (40, 41) having lower surfaces (32, 33, 51, 52, 53, 54) for pressing together the side flaps (19) and folded end flaps (20), a recessed area (48) in at least one of said lower surfaces (32, 33, 51, 52, 53, 54) to provide an area that is not firmly adhered at the center of the upper portion of said end flaps (20) to facilitate opening of the carton and one of said jaws (40, 41) having a protrusion (36, 47, 471) immediately below said recessed area (48) to provide a center stake point (70) which presses together, expands into abutment and seals said adjacent edges of the inwardly folded end flaps (20), said recessed area (48) and protrusion (36, 47, 471) being adapted to engage and define said first predetermined portions including:
i) a horizontal stake line (22) extending the full length of the side flaps (19) at a level just above the upper edge of the end flaps (20);
ii) at least one vertical stake line (21) located inwardly of at least one end of the flaps (19, 20) extending downward from the horizontal stake line (22) to the horizontal fold line (27);
iii) a center stake (70) located at the central portion of the side flaps (19) in the vicinity of the junction of the inwardly folded end flaps (20), said center stake (70) being of a size and shape sufficient to cover portions of both the end flaps (20) and being located above the horizontal fold line (27), said stake lines (21, 22) and center stake (70) being configured and positioned, such that pressure applied to said stake lines (21, 22) and said center stake (70) by said jaws (40, 41) is sufficient to create hermetic seals at these portions of the sealing flaps (19, 20) and lesser amounts of pressure to other portions of the sealing flaps (19, 20), such lesser amounts of pressure being sufficient to provide a seal at these other portions that in combination with the seal provided at the stake lines (21, 22) and at the center stake (70) results in an overall hermetic seal which prevents bacteria and air from entering the carton through the sealing flaps (19, 20), but which lesser amounts of pressure, if applied across the stake lines (21, 22), center stake (70) and other portions of the sealing flaps (19, 20) would not provide a seal sufficient to prevent bacteria and air from entering the carton through the sealing flaps (19, 20).

34. A die as claimed in claim 33, in which a linear horizontal rib (34, 43) is provided in one of said jaws (40, 41) at the junction between the upper surfaces (31, 50, 55) and the lower surfaces (32, 33, 51, 52, 53, 54), acting in cooperation with the other of said jaws (40, 41) to provide a horizontal stake line (22) just above the upper edges of the end flaps (19).

35. A die as claimed in claim 34, comprising on one of said jaws (40, 41) vertical ribs (35, 44, 45, 46) extending downwardly from said horizontal rib (34, 43) to provide vertical stake lines (21, 21a) adjacent to each end of the side flaps (19).

36. A die as claimed in claim 35, in which there is an additional recessed area (49) below said recess (48) and extending between one of said vertical ribs (46) and the center of the die (30).

37. A die as claimed in claim of claims 33 to 36, wherein said protrusion (36, 47, 471) has a semi-circular shape in the plane of the jaw (40, 41) from which it protrudes.

38. A die as claimed in any of claims 33 to 37, wherein the protrusion (36, 47, 471) is located to provide a center stake point (70) immediately below the upper edge of the end flaps (20).

39. A die as claimed in claim 35, or any claim appended thereto, comprising in one of said jaws (40, 41) a first recessed area in the lower surface extending from the area of the protrusion (36, 47, 471) outwardly toward the end of the jaw (40, 41) corresponding to the spout end of the carton to a point proximate to one of the vertical ribs (46).

40. A die as claimed in claim 39, comprising a second recessed area centered approximately two thirds of the way between the protrusion (36, 47, 471) and the vertical rib (46) on the spout end of the carton, said second recessed area being progressively recessed from the plane of the first recessed area commencing at the horizontal rib (34, 43).

## Patentansprüche

1. Verfahren zum lagerbeständigen Verpacken eines begrenzt haltbaren flüssigen Lebensmittelproduktes in einem giebelförmigen Behälterkarton, der innen und/oder außen mit einem thermoplastischen Material beschichtet ist und Abdichtverschlussklappen aufweist, die seitliche Verschlussklappen (19) und nach innen gefaltete Abschlussverschlussklappen (20) aufweisen, wobei der untere Rand von jeder Verschlussklappe durch eine horinzontale Knicklinie (27) bestimmt ist, an der die Verschlussklappen sich nach innen erweitern, um die Spitze des Behälterkartons zu bilden, wobei jede Verschlussklappe einen oberen Rand aufweist und der obere Rand der seitlichen Verschlussklappen (19) sich über die oberen Ränder der Abschlussklappen (20) erstreckt, wobei ein Anordnung der Abschlussverschlussklappen (20) nach aussen stülpbar ist und einen Ausgiessschnabel bildet, wobei das Verfahren folgende Schritte aufweist:
a) die Gewährleistung, dass das flüssige Lebensmittelprodukt frei von pathogenen und thermophilen Organismen ist;
b) Befüllen des Behälterkartons mit dem flüssigen Lebensmittelprodukt, wobei im wesentlichen eine Raumtemperatur beibehalten wird;
c) hermetisches Abdichten des Behälterkartons mit dem flüssigen Lebensmittelprodukt im wesentlichen bei Raumtemperatur, indem Wärme und eine erste Druckhöhe auf vorherbestimmte Bereiche der Abdichtverschlussklappen aufgebracht wird, wobei die vorherbestimmten Bereiche durch folgendes definiert sind:
i) eine waagrechte Prägelinie (22), die sich über die gesamte Länge der seitlichen Verschlussklappen (19) in einer Höhe gerade über dem oberen Rand des Randes der Abschlussverschlussklappen (20) erstreckt;
ii) wenigstens eine senkrechte Prägelinie (21), die von wenigstens einem Ende der Verschlussklappen nach innen versetzt vorgesehen ist und sich von der waagrechten Prägelinie (22) zu der waagrechten Knicklinie (27) abwärts erstreckt;
iii) eine Mittelprägung (70), die in dem mittleren Bereich der seitlichen Verschlussklappen (19) in der Nähe der Verbindung der nach innen gefalteten Abschlussverschlussklappen (20) angeordnet ist, wobei die Mittelprägung (70) eine Grösse und Gestalt aufweist, die ausreicht, um Bereiche der beiden Abschlussverschlussklappen (20) zu überdecken, und die über der waagrechten Knicklinie (27) angeordnet ist, wobei die Prägelinien (21, 22) und die Mittelprägung (70) so angeordnet und ausgerichtet und die erste vorherbestimmte Höhe an Druck und Wärme, die auf die Prägelinien (21, 22) und die Mittelprägung (70) aufgebracht werden, so ausreichend sind, daß an diesen Bereichen der Abdichtungs-verschlussklappen (19, 20) eine hermetische Abdichtung erzeugt wird, und wobei geringere Höhen an Druck an andere Bereiche der Abdichtverschlussklappen (19, 20) angelegt werden, wobei diese geringeren Druckhöhen ausreichen, um eine Abdichtung an diesen anderen Bereichen zu schaffen, die in Verbindung mit der Dichtung an den Prägelinien (21, 22) und der anderen Prägung (70) zu einer völlig hermetischen Abdichtung führt, die verhindert, daß Bakterien und Luft in den Behälterkarton durch die Abdichtungsverschlussklappen (19, 20) eintreten, wobei aber diese geringeren Höhen an Druck, wenn angelegt an beide vorherbestimmte Bereiche und an die anderen Bereiche der Abdichtverschlussklappen (19, 20), keine Abdichtung schaffen würden, die ausreicht, um ein Eintreten von Bakterien und Luft in den Behälterkarton durch die Abdichtverschlussklappen (19, 20) zu verhindern; wobei der gesamte Erfolg darin besteht, einen Behälterkarton zu schaffen, der leichter als ein Behälterkarton zu öffnen ist, bei dem alle abgedichteten Bereiche der Abdichtverschlussklappen (19, 20) durch die erste vorherbestimmte Höhe an Druck abgedichtet wurden;
d) Aufheizen des Lebensmittelproduktes in dem abgedichteten Behälterkarton auf eine Temperatur, die zum Pasteurisieren ausgreicht, aber unter der Erweichungstemperatur der thermo-plastischen Beschichtung(en) liegt;
e) Halten des Lebensmittelproduktes für eine ausreichende Zeit auf der Pasteurisierungstemperatur, um im wesentlichen alle in dem abgedichteten Behälterkarton verbliebenen Mikroorganismen abzutöten; und
f) Kühlen des giebelförmigen Behälterkartons und seines pasteurisierten Inhalts.

2. Verfahren nach Anspruch 1, nach dem die anderen Bereiche, welche mit weniger Druck beaufschlagt werden, einen ersten Bereich zwischen dem oberen Rand der Abschlussverschlussklappen (20) und der waagrechten Knicklinie (27) aufweisen, wobei sich der Bereich von der Region der Mittelprägung gegen das Ende des Ausgiessschnabels des Behälterkartons erstreckt.

3. Verfahren nach Anspruch 2, wobei sich der erste Bereich von der Region der Mittelprägung ungefähr ein Drittel des Abstandes zu dem Ende des Ausgiessschnabels des Behälterkartons nach aussen erstreckt.

4. Verfahren nach Anspruch 2, nach welchem die Mittelmarkierung (70) auf einem Punkt in der Mitte zwischen dem oberen Rand der Abschlussverschlussklappen (20) und der waagrechten Knicklinie (27) angeordnet ist.

5. Verfahren nach Anspruch 2, nach welchem der erste Bereich in der Form eines Dreieckes (25) ausgebildet ist, das spitz gegen das Ende des Ausgiessschnabels des Behälterkartons verläuft.

6. Verfahren nach Anspruch 2, 3 oder 5, nach welchem ferner Druck auf einen zweiten Bereich verringert wird, der sich unterhalb des oberen Randes der Abschlussverschlussklappen (20) zwischen der Mittelprägung (70) und der senkrechten Markierung (21) am Ende des Ausgiessschnabels des Behälterkartons erstreckt.

7. Verfahren nach Anspruch 6, nach welchem der Druck auf den zweiten Bereich fortschreitend entlang der waagrechten Prägelinie (22) nach unten verringert wird.

8. Verfahren nach Anspruch 6 oder 7, wobei der zweite Bereich ungefähr in der Mitte von zwei Drittel der Strecke zwischen der Mittelprägung (70) und der senkrechten Markierung (21) auf der Seite des Ausgiessschnabels des Behälterkartons angeordnet wird.

9. Verfahren nach einem der vorhergehenden Ansprüche, wobei Wärme und Druck an den seitlichen Verschlussklappen (19) angelegt werden, um die äussere thermoplastische Beschichtung aufzuweichen, so dass die seitlichen Verschlussklappen (19) aneinanderkleben und die Abschlussverschlussklappen (20) mit den unteren Bereichen der seitlichen Verschlussklappen (19) und mit dem oberem Bereich einer Abschlussverschlussklappe (20) verkleben, um eine leicht zu öffnende Dichtung zu bilden.

10. Verfahren nach einem der vorhergehenden Ansprüche, wobei Wärme und eine erste Druckhöhe auf die vorherbestimmten problematischen Bereiche der seitlichen Verschlussklappen (19) aufgebracht wird, um die thermoplastische äussere Beschichtung aufzuweichen, so dass diese problematischen Bereiche miteinander verkleben und die Abschlussverschlussklappen (20) mit den unteren Bereichen der seitlichen Verschlussklappen (19) verkleben, und eine zweite Druckhöhe, die geringer als die erste Druckhöhe ist an andere unproblematische Bereiche der Verschlussklappen (19, 20) aufgebracht wird, um so Bereiche zu erzielen, die nur leicht in der Mitte des oberen Teils der Abschlussverschlussklappen (20) abgedichtet sind, um das Öffnen des Behälterkartons durch einen Konsumenten zu erleichtern.

11. Verfahren nach einem der vorhergehenden Ansprüche, nach dem die aufrecht gehaltene Pasteurisierungstemperatur in einem Bereich von 160 F bis 174 F (71° C bis 79° C) liegt.

12. Verfahren nach Anspruch 11, nach dem die aufrecht gehaltene Pasteurisierungstemperatur ungefähr 167 F (75° C) beträgt.

13. Verfahren nach Anspruch 12, nach dem das Lebensmittelprodukt für etwa 10 Minuten auf einer Pasteurisierungstemperatur von ungefähr 167 F (75° C) gehalten wird.

14. Verfahren nach einem der vorhergehenden Ansprüche, nach dem das thermoplastische Material aus Polyäthylen besteht.

15. Verfahren nach einem der vorhergehenden Ansprüche, nach dem das flüssige Lebensmittelprodukt keine künstlichen Konservierungmittel enthält.

16. Verfahren nach einem der vorhergehenden Ansprüche, wobei die Temperatur des flüssigen Lebensmittelproduktes zu dem Zeitpunkt des Abfüllens in den Behälterkarton im Bereich von 60 F bis 80 F (16° C bis 27° C) liegt.

17. Verfahren nach einem der vorhergehenden Ansprüche, wobei das flüssige Lebensmittelprodukt in den Behälterkarton in einer Umgebung, die der Atmosphäre ausgesetzt ist, abgefüllt wird.

18. Verfahren nach einem der vorhergehenden Ansprüche, welches die folgende Schritte aufweist:
a) Falten der Abschlussverschlussklappen (20) entlang eines sich senkrecht erstreckenden Mittellinienbereiches, so dass eine erste Hälfte der äusseren Fläche von jeder Abschlussverschlussklappe (20) auf die andere Hälfte von ihr gefaltet wird, und die innere Fläche von jeder, Abschlussverschlussklappe (20) gegen innere Flächen von benachbarten seitlichen Verschlussklappen (19) gefaltet wird, so dass die Mittellinienbereiche der gegenüberliegenden Abschlussverschlussklappen (20) zueinander benachbart und, wenn möglich, durch eine schmale, senkrechte Lücke (29) getrennt sind, wobei die schmale, senkrechte Lücke (29) durch die gegenüberliegenden Mittellinienbereiche der Abschlussverschlussklappen (20) und innere Flächen der gegenüberliegenden seitlichen Verschlussklappen (19) in ihrer Größe begrenzt ist;
b) Anlegen von wenigstens einem Bereich der inneren Fläche von jeder Abschlussverschlussklappe (20) an die inneren Fläche der seitlichen Verschlussklappe (19), welche dagegen gefaltet ist; und
c) Herstellung der Dichtung quer über den oberen Bereich der Lücke, um die Lücke (29) ohne Abdichten des unteren Bereichs der Lücke (29), abzudichten, um einen Ausklappverschluss zu schaffen.

19. Verfahren nach einem der vorhergehenden Ansprüche, wobei das flüssige Lebensmittelprodukt mindestens drei Monate ohne Kühlung lagerbeständig bleibt.

20. Verfahren nach einem der vorhergehenden Ansprüche, wobei nach dem Pasteurisieren das Lebensmittelprodukt durch abgekühltes Wasser auf eine Temperatur von ungefähr 90 F bis 105 F (32° C bis 41° C) abgekühlt wird.

21. Abgedichteter giebelförmiger Behälterkarton zum Aufnehmen eines verderblichen flüssigen Lebensmittelproduktes, wobei der giebelförmige Behälterkarton einen Giebelverschluss aufweist, der sich gegenüberliegende Seitenstreifen (15) mit seitlichen Verschlussklappen (19), die sich von diesen wegerstrecken, und sich gegenüberliegende Abschlussstreifen (17) mit Abschlussverschlussklappen (20) besitzt, die sich von diesen in einer geringeren Höhe als die Höhe der Verschlussklappen (19) der Seitenstreifen (15) weg erstrecken, wobei die Seitenstreifen (15) und Abschlussstreifen (17) Knicklinien (16, 18) aufweisen, um ein Schliessen und Öffnen zu erleichtern, und die sich gegenüberliegenden seitlichen Verschlussklappen (19) miteinander verklebbar, und die Abschlussverschlussklappen (20) mit den unteren Bereichen der seitlichen Verschlussklappen (19) verklebbar, und die Verschlussklappen (19, 20) in ersten vorherbestimmten Bereichen und zweiten vorherbestimmten Bereichen so abdichtbar sind, dass unterschiedlich stark haftende Dichtungen in den ersten und zweiten Bereichen erzielt werden, um das Öffnen des Behälterkartons durch einen Konsumenten zu erleichtern; wobei jede der Verschlussklappen (19, 20) durch eine waagrechte Knicklinie (27) bestimmt ist, von der die Verschlussklappen (19, 20) sich aus erstrecken, um die Spitze des Behälterkartons zu bilden, wobei jede der Verschlussklappen (19, 20) einen oberen Rand aufweist, und der obere Rand der seitlichen Verschlussklappen (19) sich über die oberen Ränder der Abschlussverschlussklappen (20) hinweg erstreckt, wobei eine Anordnung der Abschlussverschlussklappen nach aussen stülpbar ist, um einen Ausgiessschnabel zu bilden; und wobei die erste vorherbestimmten Bereiche durch folgendes definiert sind:
i) eine waagrechte Prägelinie (22), die sich über die gesamte Länge der seitlichten Verschlussklappen (19) in einer Höhe gerade über dem oberen Rand der Abschlussverschlussklappen (20) erstreckt;
ii) wenigstens eine senkrechte Prägelinie (21), die von wenigstens einem Ende der Verschlussklappen (19, 20) nach innen versetzt vorgesehen ist und sich von der waagrechten Prägelinie (22) zu der waagrechten Knicklinie (27) abwärts erstreckt;
iii) eine Mittelprägung (70), die in dem mittleren Bereich der seitlichen Verschlussklappen (19), in der Nähe der Verbindung der nach innen gefalteten Abschlussverschlussklappen (20) angeordnet ist, wobei die Mittelprägung (70) eine Grösse und Gestaltung aufweist, die ausreicht, um Bereiche der beiden Abschlussverschlussklappen (20) zu überdecken, und die über der waagrechten Knicklinie (27) angeordnet ist, wobei die Prägelinien (21, 22) und die Mittelprägung (70) so angeordnet und ausgerichtet und die erste vorherbestimmte Höhe an Druck, der an den Prägelinien (21, 22) und an die Mittelprägung (70) aufgebracht wird, ausreicht, um eine hermetische Abdichtung an diesen Bereichen der Abdichtverschlussklappen (19, 20) zu schaffen;
wobei eine erste vorherbestimmte Druckhöhe, die an den Prägelinien (21, 22) und an der Mittelprägung (70) angelegt worden ist, ausreicht, um eine hermetische Abdichtung in den ersten vorherbestimmten Bereichen zu schaffen;
wobei die zweiten vorherbestimmten Bereiche mit geringeren Druckhöhen abgedichtet werden und die geringeren Druckhöhen ausreichend sind, um eine Dichtung in den zweiten Bereichen zu erzielen, die in Kombination mit der Dichtung an den Prägelinien (21, 22) und der Mittelprägung (70) eine gesamte hermetische Abdichtung ergibt, die verhindert, daß Bakterien und Luft durch die Abdichtverschlussklappen (19, 20) in den Behälterkarton eintreten, wobei diese geringeren Druckhöhen aber, wenn an die ersten und zweiten Bereiche der Dichtungsverschlussklappen (19, 20) angelegt, keine geeignete Abdichtung schaffen würden, um das Eintreten von Bakterien und Luft in den Behälterkarton durch die Abdichtverschlussklappen (19, 20) zu verhindern;
wobei der gesamte Erfolg darin besteht, dass der Behälterkarton leichter zu öffnen ist, als ein Behälterkarton, bei dem alle abgedichteten Bereiche der Abdichtverschlussklappen (19, 20) durch die erste vorherbestimmte Druckhöhe abgedichtet wurden.

22. Giebelförmiger Behälterkarton nach Anspruch 21, wobei das leicht verderbliche, flüssige Lebensmittelprodukt in den Behälterkarton bei ungefähr Raumtemperatur einfüllbar ist, bevor der Behälterkarton abgedichtet, auf eine Pasteurisierungstemperatur nach der Abdichtung erwärmt und auf dieser Pasteurisierungstemperatur eine ausreichende Zeit gehalten wird, um das Produkt zu pasteurisieren und das Innere des Behälterkartons zu sterilisieren.

23. Giebelförmiger Behälterkarton nach Anspruch 21 oder 22, bei dem die Verschlussklappen (19, 20) durch Heissiegeln geklebt sind.

24. Giebelförmiger Behälterkarton nach einem der Ansprüche 21 bis 23, wobei die Abichtung durch Aufbringen unterschiedlicher Drücke gegen die Verschlussklappen (19, 20) erzielt ist, so dass unterschiedliche Bereiche der Verschlussklappen (19, 20) mit unterschiedlich hohen Drücken abdichtbar sind, um einen stark haftenden Bereich und einen ersten leicht abgedichteten Bereich in der Mitte und an dem oberen Bereich einer Abschlussverschlussklappe (20) zu bilden.

25. Giebelförmiger Behälterkarton nach Anspruch 24, bei dem der leicht abgedichtete Bereich die Gestalt eines Dreiecks (25) annimmt.

26. Giebelförmiger Behälterkarton nach Anspruch 24 oder 25, bei dem die Mittelprägung (70) unmittelbar unter dem leicht abgedichteten Bereich liegt.

27. Giebelförmiger Behälterkarton nach Anspruch 24, 25 oder 26, wobei ein zweiter leicht abgedichteter Bereich in der Abschlussverschlussklappe (20) vorgesehen ist, die den ersten leicht abgedichteten Bereich aufweist, wobei sich der zweite leicht abgedichtete Bereich entlang des unteren Bereiches der Abschlussverschlussklappe (20) im wesentlichen von der Mitte zu einem Punkt, der von dem äusseren Rand beabstandet ist, erstreckt.

28. Giebelförmiger Behälterkarton nach einem der Ansprüche 21 bis 27, bei dem das Innere und/oder das Äussere des Behälterkartons mit thermoplastischem Material beschichtet ist.

29. Giebelförmiger Behälterkarton nach Anspruch 28, wobei die äussere thermoplastische Beschichtung bei einer vorherbestimmten Temperatur erweicht und die Pasteurisierungstemperatur geringer ist als die vorherbestimmte Temperatur, bei welcher die äussere Oberflächenschicht des Behälterkartons erweicht.

30. Giebelförmiger Behälterkarton nach einem der Ansprüche 21 bis 29, wobei der Verschluss durch eine Dichtung quer über die Verschlussklappen (19, 20) 50 abgedichtet ist, dass der Behälterkarton hermetisch abgedichtet ist, dass der Bereich der Verschlussklappen (19, 20) unmittelbar neben einem Schnittpunkt von Knicklinien in (18) nicht abgedichtet oder leicht abgedichtet ist, und dass während des Öffnens dieser Bereich herausklappt, um ein Öffnen des Behälterkartons zu erleichtern, wobei die Knicklinien (18) an wenigstens einem Abschlussverschlussstreifen (17) an einem Punkt angeordnet sind, welche der Spitze von einem Ausgiesschnabel entspricht, von dem sich die Abschlussverschlussklappen (17) weg erstrecken.

31. Giebelförmiger Behälterkarton nach Anspruch 30, wobei der Behälterkarton durch Aufbringen von Wärme und einer ersten Druckhöhe auf die vorherbestimmten Bereiche von den gegenüberliegenden seitlichen Verschlussklappen (19) und Abschlussverschlussklappen (20), um diese Bereiche der gegenüberliegenden seitlichen Verschlussklappen (19) miteinander zu verkleben und diese Bereiche der Verschlussklappen (20) mit den unteren Bereichen der seitlichen Verschlussklappen (19) zu verkleben, und Aufbringen einer zweiten Druckhöhe, die geringer als die erste Druckhöhe ist, an anderen Bereichen der Verschlussklappen (19, 20) abgedichtet wird, um so Bereiche, die leicht abgedichtet sind, in der Mitte der oberen Bereiche der Abschlussverschlussklappen (20) zu erzielen, um ein Öffnen des Behälterkartons durch einen Konsumenten zu erleichtern, und wobei der Bereich der Verschlussklappen (19, 20), der sich unmittelbar neben der Schnittstelle der Knicklinien befindet, im wesentlichen nicht abgedichtet belassen wird.

32. Giebelförmiger Behälterkarton nach einem der Ansprüche 21 bis 31, wobei die seitlichen Verschlussklappen (19) und die Abschlussverschlussklappen (20) jeweils eine innere und eine äussere Oberfläche aufweisen, und die Abschlussverschlussklappen (20) entlang einer Knicklinie (18) gefaltet sind, so dass ein erster Bereich der äusseren Oberfläche von jeder Abschlussverschlussklappe (20) in ebener Berührung mit einem anderen Bereich der äusseren Oberfläche der Verschlussklappe (20) ist und die inneren Oberflächen von jeder Abschlussverschlussklappe (20) gegenüber den inneren Oberflächen der Verschlussklappen (19) abgedichtet sind, und die Knicklinien (18) von jeder der gegenüberliegenden Abschlussverschlussklappen (20) benachbart und voneinander getrennt durch eine sich senkrecht erstreckende Lücke sind, die durch die Bereiche der inneren Oberflächen der Verschlussklappen (20) und seitlichen Verschlussklappen (19) und dem oberen Bereich der Lücke beschränkt ist, die von dem oberen Rand der Abschlussverschlussklappen (20) zu einem Punkt oberhalb dem senkrechten Mittelpunkt der Abschlussverschlussklappen (20) abgedichtet ist, und der untere Bereich der Lücke im wesentlichen nicht abgedichtet ist.

33. Druckplatte (30) zum Abdichten eines heissiegelbaren Behälterkartons mit einem giebelförmigen Verschluss, wobei der giebelförmige Verschluss seitliche Verschlussklappen (19), die sich von dem gegenüberliegenden Seitenstreifen (15) erstrecken, und Abschlussverschlussklappen (20) aufweist, die sich von gegenüberliegenden Abschlussstreifen (17) in einer geringeren Höhe, als die Verschlussklappen (19) der Seitenstreifen (15), erstrecken, wobei die Abschlussverschlussklappen (20) benachbarte Bereiche aufweisen, wenn diese nach innen gefaltet sind, um den Verschluss auszubilden, und wenigstens einen Abschlussstreifen (17) mit Knicklinien (18) versehen ist, um das Öffnen und Schliessen eines Endes eines Behälterkartons zu erleichtern, wobei die Druckplatte (30) ein Paar Backen (40, 41) aufweist, und jede Backe (40, 41) eine obere Oberfläche (31, 50, 55) aufweist und die seitlichen Verschlussklappen (19) gegeneinander zu pressen, die oberhalb der Abschlussverschlussklappen (20) liegen, wobei die Backen (40, 41) untere Oberflächen (32, 33, 51, 52, 53, 54) aufweisen, um die seitlichen Verschlussklappen (19) und gefalteten Abschlussverschlussklappen (20) gegeneinander zu pressen, wobei ein ausgekehlter Bereich (48) in wenigstens einer der unteren Oberflächen (32, 33, 51, 52, 53, 54) einen Bereich bildet, der in der Mitte des oberen Bereiches der Abschlussverschlussklappen (20) nicht stark gebunden ist, um das Öffnen des Behälterkartons zu erleichtern, und wobei eine der Backen (40, 41) einen Vorsprung (36, 47, 471) aufweist, der unmittelbar unterhalb dem ausgekehlten Bereich (48) vorgesehen ist, um einen Mittelprägungspunkt (70) zu bilden, der die benachbarten Ränder der nach innen gefalteten Abschlussverschlussklappen zusammengepresst, in Auflage aufweitet und abdichtet abgedichtet, wobei der ausgekehlte Bereich (48) und der Vorsprung (36, 47, 471) so ausgelegt sind, um zusammenzuwirken und die ersten vorherbestimmten Bereiche auszubilden, die wie folgt definiert sind:
i) eine waagrechte Prägelinie (22), die sich über die gesamte Länge der seitlichen Verschlussklappe (19) in einer Höhe gerade über dem oberen Rand der Abschlussverschlussklappen (20) erstreckt;
ii) wenigstens eine senkrechte Prägelinie (21), die von wenigstens einem Ende der Verschlussklappen (19, 20) nach innen versetzt vorgesehen ist und sich von der waagrechten Prägelinie (22) zu der waagrechten Knicklinie (27) abwärts erstreckt;
iii) eine Mittelprägung (70), die in dem mittleren Bereich der seitlichen Verschlussklappen (19) in der Nähe der Verbindung der nach innen gefalteten Abschlussverschlussklappen (20) angeordnet ist, wobei die Mittelprägung (70) eine Grösse und Gestaltung aufweist, die ausreicht, um Bereiche der beiden Abschlussverschlussklappen (20) zu überdecken, und die über der waagrechten Knicklinie (27) angeordnet ist, wobei die Prägelinien (21, 22) und die Mittelprägung (70) so angeordnet und ausgerichtet sind, dass ein Druck, der an den Prägelinien (21, 22) und der Mittelprägung (70) durch die Backen (40, 41) aufgebracht ist, ausreichend ist, um eine hermetische Dichtung an diesen Bereichen der Abdichtverschlussklappen (19, 20) zu schaffen, und geringere Druckhöhen für andere Bereiche der Abdichtverschlussklappen (19, 20) ausreichend sind, um eine Dichtung an diesen anderen Bereichen zu schaffen, die in Kombination mit der Dichtung an den Prägelinien (21, 22) und der Mittelprägung (70) eine gesamte hermetische Abdichtung bildet, die verhindert, dass Bakterien und Luft durch die Abdichtverschlussklappen (19, 20) in den Behälterkarton eintreten, wobei diese geringeren Druckhöhen, wenn an die Merkierungslinien (21, 22), Mittelmarkierung (70) und andere Bereiche der Abdichtverschlussklappen (19, 20) angelegt, keine genügende Abdichtung schaffen würden, um das Eintreten von Bakterien und Luft in den Behälterkarton durch die Abdichtverschlussklappen (19, 20) zu verhindern.

34. Druckplatte nach Anspruch 33, bei welcher eine geradlinige waagrechte Leiste (34, 43) an einer der Backen (40, 41) an der Verbindung zwischen den oberen Oberflächen (31, 50, 55) und den unteren Oberflächen (32, 33, 51, 52, 53, 54) vorgesehen ist, die mit der anderen Backe (40, 41) zusammenwirkt, um eine waagrechte Prägelinie (22) zu bilden, die gerade über den oberen Rändern der Verschlussklappen (19) angeordnet ist.

35. Druckplatte nach Anspruch 34, mit an einer der Backen (40, 41) vorgesehenen senkrechten Leisten (35, 44, 45, 46), die sich abwärts von der waagrechten Leiste (34, 43) erstrecken, um vertikale Prägelinien (21, 21a) zu bilden, die neben jedem Ende der seitlichen Verschlussklappen (19) angeordnet sind.

36. Druckplatte nach Anspruch 35, in welcher ein zusätzlicher ausgekehlter Bereich (49) unterhalb der Auskehlung (48) vorgesehen ist und sich zwischen den senkrechten Leisten (46) und der Mitte der Druckplatte (30) erstreckt.

37. Druckplatte nach Anspruch 33 bis 36, wobei der Vorsprung (36, 47, 471) eine halbkreisförmige Gestalt in der Ebene der Backe (40, 41) annimmt, aus der er hervorspringt.

38. Druckplatte nach einem der Ansprüche 33 bis 37, wobei der Vorsprung (36, 47, 471) so angeordnet ist, dass er einen Mittelprägepunkt (70) unmittelbar unterhalb des oberen Randes der Abschlussverschlussklappen (20) ausformt.

39. Druckplatte nach Anspruch 35 oder einem diesem nachfolgenden Ansprüche, mit einem ersten ausgekehlten Bereich in einer der Backen (40, 41) in einer unteren Oberfläche, der sich von dem Bereich des Vorsprungs (36, 47, 471) nach aussen gegen das Ende der Backe (40, 41), das mit dem Ausgiessschnabelende des Behälterkartons zusammenfällt bis zu einem Punkt nahe einer der senkrechten Leisten (46) erstreckt.

40. Druckplatte nach Anspruch 39, die einen zweiten ausgekehlten Bereich aufweist, der annäherungsweise zu zwei Drittel der Stecke zwischen dem Vorspung (36, 47, 471) und der senkrechten Leiste (46) an dem Ausgiessschnabelende des Behälterkartons angeordnet ist, wobei der zweite ausgekehlte Bereich fortschreitend von der Ebene des ersten ausgekehlten Bereiches ausgespart wird, der bei der horizontalen Leiste (34, 43) beginnt.

## Revendications

1. Procédé de conditionnement pour la conservation d'un produit alimentaire liquide périssable dans un carton à partie supérieure en forme de toit qui est recouvert intérieurement et/ou extérieurement d'un matériau thermoplastique et qui comporte des rabats d'étanchéité incluaut des rabats latéraux (19) et des rabats d'extrémité (20) repliés vers l'intérieur, le bord inférieur de chaque rabat étant défini par une ligne de pliage horizontale (27) où les rabats s'évasent pour former le haut du carton, chaque rabat comportant un bord supérieur et le bord supérieur des rabats latéraux (19) s'étendant au-delà des bords supérieurs des rabats d'extrémité (20), un groupe de ces rabats d'extrémité (20) pouvant être repliés vers l'extérieur pour former un bec verseur, le procédé comprenant les étapes consistant à :
a) s'assurer que le produit alimentaire liquide est exempt d'organismes thermophiles et pathogènes,
b) remplir le carton avec le produit alimentaire liquide maintenu sensiblement à la température ambiante,
c) sceller hermétiquement le carton qui contient ledit produit alimentaire liquide sensiblement à la température ambiante par application de chaleur et d'une première valeur de pression prédéterminée à des parties prédéterminées des rabats d'étanchéité, lesdites parties prédéterminées comprenant :
i) une ligne d'agrafage horizontale (22) qui s'étend sur toute la longueur des rabats latéraux (19), juste au-dessus du bord supérieur des rabats d'extrémité (20),
ii) au moins une ligne d'agrafage verticale (21) placée à l'intérieur d'au moins une extrémité des rabats et qui s'étend vers le bas, de la ligne d'agrafage horizontale (22) à la ligne de pliage horizontale (27),
iii) une agrafe centrale (70) placée dans la partie centrale des rabats latéraux (19), au voisinage de la jonction des rabats d'extrémité (20) repliés vers l'intérieur, ladite agrafe centrale (70) ayant une forme et des dimensions suffisantes pour recouvrir des parties des deux rabats d'extrémité (20) et étant placée au-dessus de la ligne de pliage horizontale (27), lesdites lignes d'agrafage (21, 22) et ladite agrafe centrale (70) ayant une position et une configuration telles et lesdites chaleur et première valeur de pression prédéterminée appliquées auxdites lignes d'agrafage (21, 22) ainsi qu'à ladite agrafe centrale (70) étant suffisantes pour créer des joints hermétiques au niveau de ces parties desdits rabats d'étanchéité (19, 20), des valeurs de pression inférieures étant appliquées aux autres parties des rabats d'étanchéité (19, 20), lesdites valeurs inférieures de la pression étant suffisantes pour assurer une étanchéité au niveau de ces autres parties qui, en association avec l'étanchéité fournie au niveau des lignes d'agrafage (21, 22) et de l'agrafe centrale (70), résulte en un joint hermétique général qui empêche l'air et les bactéries de pénétrer dans le carton par les rabats d'étanchéité (19, 20), mais sachant que ces valeurs inférieures de la pression, si elles étaient appliquées auxdites parties prédéterminées et auxdites autres parties des rabats d'étanchéité (19, 20), ne donneraient pas une étanchéité suffisante pour empêcher l'air et les bactéries de pénétrer dans le carton par les rabats d'étanchéité (19, 20), sachant que l'effet général est de fournir un carton qui est plus facile à ouvrir qu'un carton dans lequel toutes les parties scellées des rabats d'étanchéité (19, 20) auraient été scellées avec la première valeur prédéterminée de la pression,
d) chauffer le produit alimentaire dans le carton scellé jusqu'à une température suffisante pour la pasteurisation mais inférieure à la température de ramollissement du ou des revêtement(s) thermoplastique(s),
e) maintenir le produit alimentaire à la température de pasteurisation pendant un temps suffisant pour tuer sensiblement tous les micro-organismes qui restent à l'intérieur du carton scellé, et
f) laisser refroidir le carton à partie supérieure en forme de toit et son contenu pasteurisé.

2. Procédé selon la revendication 1, dans lequel lesdites autres parties auxquelles est appliquée une pression inférieure incluent une première région comprise entre le bord supérieur des rabats d'extrémité (20) et la ligne de pliage horizontale (27), région qui s'étend depuis la région de l'agrafe centrale vers l'extérieur, en direction de l'extrémité du bec verseur du carton.

3. Procédé selon la revendication 2, dans lequel la première région s'étend vers l'extérieur depuis la région de l'agrafe centrale sur approximativement un tiers de la distance vers l'extrémité du bec verseur du carton.

4. Procédé selon la revendication 2, dans lequel l'agrafe centrale (70) est placée au-dessus d'un point situé à mi-chemin entre le bord supérieur des rabats d'extrémité (20) et la ligne de pliage horizontale (27).

5. Procédé selon la revendication 2, dans lequel la première région a la forme d'un triangle (25) avec une pointe en direction de l'extrémité du bec verseur du carton.

6. Procédé selon la revendication 2, 3 ou 5, dans lequel la pression est en outre allégée sur une seconde région qui s'étend en-dessous du bord supérieur des rabats d'extrémité (20), entre l'agrafe centrale (70) et la ligne d'agrafage verticale (21) sur l'extrémité du bec verseur du carton.

7. Procédé selon la revendication 6, dans lequel la pression sur la seconde région est allégée progressivement, de la ligne d'agrafage horizontale (22) vers le bas.

8. Procédé selon la revendication 6 ou 7, dans lequel ladite seconde région est centrée approximativement aux deux tiers de la distance entre l'agrafe centrale (70) et la ligne d'agrafage verticale (21) sur le côté du bec verseur du carton.

9. Procédé selon l'une quelconque des précédentes revendications, dans lequel de la chaleur et une pression sont appliquées aux rabats latéraux (19) pour ramollir le revêtement thermoplastique externe afin que les rabats latéraux (19) adhèrent l'un à l'autre et que les rabats d'extrémité (20) adhèrent aux parties inférieures des rabats latéraux (19) et à la partie supérieure d'un rabat d'extrémité (20) pour former ledit joint d'étanchéité facile à ouvrir.

10. Procédé selon l'une quelconque des précédentes revendications, dans lequel de la chaleur et une première valeur de pression sont appliquées à des régions critiques prédéterminées des rabats latéraux (19) pour ramollir le revêtement thermoplastique externe afin que ces régions critiques adhèrent l'une à l'autre et que les rabats d'extrémité (20) adhèrent aux parties inférieures des rabats latéraux (19), et une seconde valeur de la pression est appliquée, valeur qui est inférieure à la première valeur de la pression, à d'autres régions, non critiques, des rabats (19, 20) pour laisser, au centre de la partie supérieure des rabats d'extrémité (20), des régions qui ne sont que légèrement scellées afin de faciliter l'ouverture du carton par le consommateur.

11. Procédé selon l'une quelconque des précédentes revendications, dans lequel la température de maintien de pasteurisation se situe dans la fourchette allant de 160°F à 174°F (71-79°C).

12. Procédé selon la revendication 11, dans lequel la température de maintien de pasteurisation vaut environ 167°F (75°C).

13. Procédé selon la revendication 12, dans lequel le produit alimentaire est maintenu à une température de maintien de pasteurisation d'environ 167°F (75°C) pendant environ 10 minutes.

14. Procédé selon l'une quelconque des précédentes revendications, dans lequel le matériau thermoplastique est du polyéthylène.

15. Procédé selon l'une quelconque des précédentes revendications, dans lequel le produit alimentaire liquide ne contient aucun conservateur artificiel.

16. Procédé selon l'une quelconque des précédentes revendications, dans lequel la température du produit alimentaire liquide au moment du remplissage du carton se situe dans la fourchette allant de 60 à 80°F (16-27°C).

17. Procédé selon l'une quelconque des précédentes revendications, dans lequel le produit alimentaire liquide est versé dans le carton dans un environnement ouvert à l'atmosphère.

18. Procédé selon l'une quelconque des précédentes revendications, comprenant les étapes consistant à :
a) replier les rabats d'extrémité (20) le long d'une région de ligne centrale qui s'étend verticalement de telle sorte qu'une première moitié de la surface extérieure de chaque rabat d'extrémité (20) soit repliée sur l'autre moitié de celle-ci et que la surface intérieure de chaque rabat d'extrémité (20) soit repliée contre des surfaces intérieures de rabats latéraux adjacents (19) afin que les régions de ligne centrale des rabats d'extrémité opposés (20) soient adjacentes l'une à l'autre et séparées par un intervalle vertical (29) aussi petit que possible, ledit petit intervalle vertical (29) étant bordé par les régions de ligne centrale des rabats d'extrémité opposés (20) et les surfaces intérieures des rabats latéraux opposés (19),
b) fixer une partie au moins de la surface intérieure de chaque rabat d'extrémité (20) à la surface intérieure du rabat latéral (19) contre lequel elle est repliée, et
c) former ledit joint d'étanchéité dans la partie supérieure dudit intervalle de manière à rendre étanche ledit intervalle (29) sans sceller la partie inférieure dudit intervalle (29) afin de donner une fermeture à ouverture rapide.

19. Procédé selon l'une quelconque des précédentes revendications, dans lequel le produit alimentaire liquide peut être conservé sans réfrigération pendant au moins trois mois.

20. Procédé selon l'une quelconque des précédentes revendications, dans lequel, après pasteurisation, le produit alimentaire est refroidi à l'eau froide jusqu'à une température d'environ 90- 105°F (32-41°C).

21. Carton scellé à partie supérieure en forme de toit, destiné à contenir un produit alimentaire liquide périssable, le carton à partie supérieure en forme de toit présentant une fermeture en forme de toit qui comprend des panneaux latéraux opposés (15) desquels partent des rabats latéraux (19) et des panneaux d'extrémité opposés (17) desquels partent des rabats d'extrémité (20) jusqu'à une hauteur inférieure à la hauteur des rabats (19) des panneaux latéraux (15), lesdits panneaux latéraux (15) et d'extrémité (17) comportant des lignes de pliage (16, 18) pour faciliter l'ouverture et la fermeture, les rabats latéraux opposés (19) pouvant adhérer l'un à l'autre et les rabats d'extrémité (20) pouvant adhérer aux parties inférieures des rabats latéraux (19), les rabats (19, 20) pouvant être scellés dans des premières régions prédéterminées et dans des secondes régions prédéterminées pour présenter des forces de scellement différentes dans lesdites premières et secondes régions afin de faciliter l'ouverture du carton par le consommateur, chaque rabat (19, 20) étant défini par une ligne de pliage horizontale (27) au niveau de laquelle les rabats (19, 20) s'évasent pour former le haut du carton, chaque rabat (19, 20) comportant un bord supérieur, le bord supérieur des rabats latéraux (19) s'étendant au-delà des bords supérieurs des rabats d'extrémité (20), un groupe de ces rabats d'extrémité pouvant être repliés vers l'extérieur pour former un bec verseur, lesdites premières régions prédéterminées comprenant :
i) une ligne d'agrafage horizontale (22) qui s'étend sur toute la longueur des rabats latéraux (19), juste au-dessus du bord supérieur des rabats d'extrémité (20),
ii) au moins une ligne d'agrafage verticale (21) placée à l'intérieur d'au moins une extrémité des rabats (19, 20) et qui s'étend vers le bas, de la ligne d'agrafage horizontale (22) à la ligne de pliage horizontale (27),
iii) une agrafe centrale (70) placée dans la partie centrale des rabats latéraux (19), au voisinage de la jonction des rabats d'extrémité (20) repliés vers l'intérieur, ladite agrafe centrale (70) ayant une forme et des dimensions suffisantes pour recouvrir des parties des deux rabats d'extrémité (20) et étant placée au-dessus de la ligne de pliage horizontale (27), lesdites lignes d'agrafage (21, 22) et ladite agrafe centrale (70) ayant une position et une configuration telles et ladite première valeur de pression prédéterminée appliquée auxdites lignes d'agrafage (21, 22) et à ladite agrafe centrale (70) étant suffisante pour créer des joints hermétiques au niveau de ces parties desdits rabats d'étanchéité (19, 20),
une première valeur de pression prédéterminée ayant été appliquée auxdites lignes d'agrafage (21, 22) et à ladite agrafe centrale (70), suffisante pour créer des joints hermétiques au niveau desdites premières parties prédéterminées,
lesdites secondes régions prédéterminées étant scellées avec des valeurs inférieures de la pression, lesdites valeurs inférieures de la pression étant suffisantes pour assurer une étanchéité au niveau desdites secondes régions qui, en association avec l'étanchéité fournie au niveau des lignes d'agrafage (21, 22) et de l'agrafe centrale (70), résulte en un joint hermétique général qui empêche l'air et les bactéries de pénétrer dans le carton par les rabats d'étanchéité (19, 20), mais ces valeurs inférieures de la pression, si elles étaient appliquées auxdites premières et secondes régions des rabats d'étanchéité (19, 20), ne donneraient pas une étanchéité suffisante pour empêcher l'air et les bactéries de pénétrer dans le carton par les rabats d'étanchéité (19, 20),
sachant que l'effet général est de fournir un carton qui est plus facile à ouvrir qu'un carton dans lequel toutes les parties scellées des rabats d'étanchéité (19, 20) ont été scellées avec la première valeur prédéterminée de la pression.

22. Carton à partie supérieure en forme de toit selon la revendication 21, dans lequel le produit alimentaire liquide périssable est versé dans le carton approximativement à température ambiante avant que le carton ne soit scellé, chauffé à une température de maintien de pasteurisation après scellement et maintenu à la température de maintien de pasteurisation pendant un temps suffisant pour pasteuriser le produit et stériliser l'intérieur du carton.

23. Carton à partie supérieure en forme de toit selon la revendication 21 ou 22, dans lequel les rabats (19, 20) sont collés par scellement à chaud.

24. Carton à partie supérieure en forme de toit selon l'une quelconque des revendications 21 à 23, dans lequel ladite étanchéité est obtenue par application de pressions variées au rabats (19, 20) de sorte que des régions différentes des rabats (19, 20) peuvent être scellées avec des valeurs différentes de la pression pour donner une région fortement scellée et une première région scellée légèrement au centre d'un rabat d'extrémité (20) ainsi que dans la partie supérieure de celui-ci.

25. Carton à partie supérieure en forme de toit selon la revendication 24, dans lequel la région scellée légèrement a la forme d'un triangle (25).

26. Carton à partie supérieure en forme de toit selon la revendication 24 ou 25, dans lequel l'agrafe centrale (70) se trouve immédiatement en-dessous de la région scellée légèrement.

27. Carton à partie supérieure en forme de toit selon la revendication 24, 25 ou 26, dans lequel une seconde région scellée légèrement existe dans le rabat d'extrémité (20) comportant la première région scellée légèrement, ladite seconde région scellée légèrement s'étendant le long de la partie inférieure du rabat d'extrémité (20), sensiblement du centre jusqu'à un point espacé du bord extérieur.

28. Carton à partie supérieure en forme de toit selon l'une quelconque des revendications 21 à 27, dans lequel l'intérieur et/ou l'extérieur du carton est recouvert d'un matériau thermoplastique.

29. Carton à partie supérieure en forme de toit selon la revendication 28, dans lequel le matériau thermoplastique externe se ramollit à une température prédéterminée, et la température de pasteurisation est inférieure à la température prédéterminée à laquelle la couche superficielle externe du carton se ramollit.

30. Carton à partie supérieure en forme de toit selon l'une quelconque des revendications 21 à 29, dans lequel la fermeture est rendue étanche du fait de la formation d'un joint d'étanchéité dans les rabats (19, 20) si bien que le carton est hermétiquement scellé de telle sorte que la région des rabats (19, 20) immédiatement adjacente à une intersection de lignes de pointillés (18) n'est pas scellée ou n'est que légèrement scellée et que, lors de l'ouverture, cette région va s'ouvrir rapidement pour faciliter l'ouverture du carton, lesdites lignes de pointillés (18) se trouvant sur au moins un panneau d'extrémité (17), en un point qui correspond au bout du bec verseur dont partent les panneaux d'extrémité (17).

31. Carton à partie supérieure en forme de toit selon la revendication 30, dans lequel le carton est scellé par application de chaleur et d'une première valeur de la pression en des régions prédéterminées des rabats d'extrémité (20) et des rabats latéraux opposés (19) pour amener ces régions des rabats latéraux opposés (19) à adhérer les unes aux autres et ces régions des rabats d'extrémité (20) à adhérer aux parties inférieures des rabats latéraux (19), et par application d'une seconde valeur de la pression, inférieure à la première valeur de la pression, aux autres régions des rabats (19, 20) de manière à laisser des régions qui ne sont que légèrement scellées au centre de la partie supérieure des rabats d'extrémité (20) pour faciliter l'ouverture du carton par le consommateur, et dans lequel la région des rabats (19, 20) immédiatement adjacente à l'intersection des lignes de pointillés est laissée sensiblement non scellée.

32. Carton à partie supérieure en forme de toit selon l'une quelconque des revendications 21 à 31, dans lequel les rabats latéraux (19) et les rabats d'extrémité (20) ont chacun une surface intérieure et une surface extérieure et les rabats d'extrémité (20) sont repliés le long d'une ligne de pliage (18) de telle sorte qu'une première partie de la surface extérieure de chaque rabat d'extrémité (20) soit en contact plan avec une autre partie de la surface extérieure du rabat (20) et que les surfaces intérieures de chaque rabat d'extrémité (20) soient scellées aux surfaces intérieures des rabats (19), les lignes de pliage (18) de chacun des rabats d'extrémité opposés (20) étant adjacentes et séparées l'une de l'autre par un intervalle qui s'étend verticalement et qui est bordé par les parties des surfaces intérieures des rabats d'extrémité (20) et les rabats latéraux (19), la partie supérieure de l'intervalle étant scellée depuis le bord supérieur des rabats d'extrémité (20) jusqu'à un point situé au-dessus du point vertical médian des rabats d'extrémité (20) et la partie inférieure de l'intervalle étant sensiblement non scellée.

33. Presse (30) permettant de sceller un carton scellable à la chaleur qui comporte une fermeture en forme de toit, ladite fermeture en forme de toit comprenant des rabats latéraux (19) qui partent de panneaux latéraux opposés (15) et des rabats d'extrémités (20) qui partent de panneaux d'extrémité opposés (17) et vont jusqu'à une hauteur inférieure à celle des rabats (19) des panneaux latéraux (15), les rabats d'extrémité (20) comportant des parties adjacentes quand ils sont repliés vers l'intérieur pour former ladite fermeture, l'un au moins des panneaux d'extrémité (17) comportant des lignes de pointillés (18) pour faciliter l'ouverture et la fermeture d'une extrémité du carton, cette presse (30) comprenant une paire de mâchoires (40, 41) comportant chacune une surface supérieure (31, 50, 55) pour presser ensemble les rabats latéraux (19) qui sont au-dessus des rabats d'extrémité (20), lesdites mâchoires (40, 41) comportant des surfaces inférieures (32, 33, 51, 52, 53, 54) pour presser ensemble les rabats latéraux (19) et les rabats d'extrémité repliés (20), une région évidée (48) dans l'une au moins desdites surfaces inférieures (32, 33, 51, 52, 53, 54) afin de donner une région qui n'adhère pas fortement au centre de la partie supérieure desdits rabats d'extrémité (20) pour faciliter l'ouverture du carton, et l'une desdites mâchoires (40, 41) comportant une saillie (36, 47, 471) placée immédiatement en-dessous de ladite région évidée (48) pour donner un point d'agrafage central (70) qui presse ensemble, étale pour les amener au contact et scelle lesdits bords adjacents des rabats d'extrémité (20) repliés vers l'intérieur, ladite région évidée (48) et ladite saillie (36, 47, 471) étant aptes à venir porter contre des premières régions prédéterminées et à les définir, régions qui incluent :
i) une ligne d'agrafage horizontale (22) qui s'étend sur toute la longueur des rabats latéraux (19), juste au-dessus du bord supérieur des rabats d'extrémité (20),
ii) au moins une ligne d'agrafage verticale (21) placée à l'intérieur d'au moins une extrémité des rabats (19, 20) et qui s'étend vers le bas, de la ligne d'agrafage horizontale (22) à la ligne de pliage horizontale (27),
iii) une agrafe centrale (70) placée dans la partie centrale des rabats latéraux (19), au voisinage de la jonction des rabats d'extrémité (20) repliés vers l'intérieur, ladite agrafe centrale (70) ayant une forme et des dimensions suffisantes pour recouvrir des parties des deux rabats d'extrémité (20) et étant placée au-dessus de la ligne de pliage horizontale (27), lesdites lignes d'agrafage (21, 22) et ladite agrafe centrale (70) ayant une position et une configuration telles que la pression appliquée auxdites lignes d'agrafage (21, 22) et à ladite agrafe centrale (70) par lesdites mâchoires (40, 41) est suffisante pour créer des joints hermétiques au niveau de ces parties desdits rabats d'étanchéité (19, 20), des valeurs de pression inférieures étant appliquées aux autres parties des rabats d'étanchéité (19, 20), lesdites valeurs inférieures de la pression étant suffisantes pour assurer une étanchéité au niveau de ces autres parties qui, en association avec l'étanchéité fournie au niveau des lignes d'agrafage (21, 22) et de l'agrafe centrale (70), résulte en un joint hermétique général qui empêche l'air et les bactéries de pénétrer dans le carton par les rabats d'étanchéité (19, 20), mais ces valeurs inférieures de la pression, si elles étaient appliquées auxdites lignes d'agrafage (21, 22), à ladite agrafe centrale (70) et auxdites autres parties des rabats d'étanchéité (19, 20), ne donneraient pas une étanchéité suffisante pour empêcher l'air et les bactéries de pénétrer dans le carton par les rabats d'étanchéité (19, 20).

34. Presse selon la revendication 33, dans laquelle une nervure horizontale rectiligne (34, 43) est présente dans l'une desdites mâchoires (40, 41), à la jonction entre les surfaces supérieures (31, 50, 55) et les surfaces inférieures (32, 33, 51, 52, 53, 54), qui agit en coopération avec l'autre desdites mâchoires (40, 41) pour former une ligne d'agrafage horizontale (22) juste au-dessus des bords supérieurs des rabats d'extrémité (20)

35. Presse selon la revendication 34, qui comporte sur l'une desdites mâchoires (40, 41) des nervures verticales (35 ,44, 45, 46) s'étendant vers le bas depuis ladite nervure horizontale (34, 43) pour former des lignes d'agrafage verticales (21, 21a) adjacentes à chaque extrémité des rabats latéraux (19).

36. Presse selon la revendication 35, dans laquelle il y a une région évidée supplémentaire (49), en-dessous de ladite régions évidée (48), qui s'étend entre l'une desdites nervures verticales (46) et le centre de la presse (30).

37. Presse selon l'une quelconque des revendications 33 à 36, dans laquelle ladite saillie (36, 47, 471) a une forme semi-circulaire dans le plan de la mâchoire (40, 41) dont elle dépasse.

38. Presse selon l'une quelconque des revendications 33 à 37, dans laquelle ladite saillie (36, 47, 471) est située de manière à fournir un point d'agrafage central (70) immédiatement en-dessous du bord supérieur des rabats d'extrémité (20).

39. Presse selon la revendication 35, ou selon toute revendication qui en dépend, comportant dans l'une desdites mâchoires (40, 41) une première région évidée dans la surface inférieure qui part de la région de la saillie (36, 47, 471) vers l'extérieur, en direction de l'extrémité de la mâchoire (40, 41), qui correspond à l'extrémité du bec verseur du carton, jusqu'à un point proche de l'une des nervures verticales (46).

40. Presse selon la revendication 36, comportant une seconde région évidée centrée approximativement aux deux tiers de la distance entre la saillie (36, 47, 471) et la nervure verticale (46) sur l'extrémité du bec verseur du carton, ladite seconde région évidée étant progressivement en retrait par rapport au plan de la première région évidée commençant au niveau de la nervure horizontale (34, 43).
